# EUROPEAN PATENT APPLICATION

(11) **EP 4 835 619 A1**
(43) Date of publication of application: **04.11.2026**
(21) Application number: 24922442.9
(22) Date of filing: 17.12.2024
(51) Int. Cl.: G06F 3/01, G06F 3/00, G06F 1/16, G06V 10/48, G06F 3/04845, G06V 40/18, G06F 3/04842

(54) **WEARABLE DEVICE AND METHOD FOR CALIBRATING GAZE INFORMATION OF USER, AND COMPUTER-READABLE STORAGE MEDIUM**

(30) Priority: 31.01.2024 KR 20240015424; 15.04.2024 KR 20240050367
(71) Applicant: Samsung Electronics Co., Ltd., Suwon-si, Gyeonggi-do 16677 (KR)
(72) Inventor: CHOI, Sungsoo, Suwon-si Gyeonggi-do 16677 (KR); KIM, Kihwan, Suwon-si Gyeonggi-do 16677 (KR); KIM, Harksang, Suwon-si Gyeonggi-do 16677 (KR); KANG, Jinmo, Suwon-si Gyeonggi-do 16677 (KR); KIM, Beomsu, Suwon-si Gyeonggi-do 16677 (KR); KIM, Sungoh, Suwon-si Gyeonggi-do 16677 (KR); KIM, Jihyun, Suwon-si Gyeonggi-do 16677 (KR); AHN, Sunggeun, Suwon-si Gyeonggi-do 16677 (KR); YEOM, Donghyun, Suwon-si Gyeonggi-do 16677 (KR); LEE, Sanghun, Suwon-si Gyeonggi-do 16677 (KR); JUNG, Sunyoung, Suwon-si Gyeonggi-do 16677 (KR); CHOI, Minsheok, Suwon-si Gyeonggi-do 16677 (KR); LEE, Gunhee, Suwon-si Gyeonggi-do 16677 (KR)
(74) Representative: HGF
(86) International application number: PCT/KR2024/020531
(87) International publication number: WO 2025/164933

(57) **Abstract**

This wearable device may comprise: a display; one or more cameras for tracking the eyeballs of a user; at least one processor; and a memory including one or more storage media that store instructions. While a plurality of visual objects are displayed on the display, the wearable device may: determine, on the basis of the one or more cameras, whether to calibrate gaze-related gaze information; reduce, on the basis of the determination of the calibration of the gaze information, the sizes of gaze input areas, each formed on the visual objects; generate calibration information to be used for calibrating the gaze information, by using the reduced sizes so as to use the gaze information detected while providing visual feedback; acquire calibrated gaze information by applying the generated calibration information to the gaze information; and expand the sizes of the gaze input areas by using the calibration information.

## Description

### [Technical Field]

The present disclosure relates to a wearable device, a method, and a computer readable storage medium for calibrating gaze information of a user.

### [Background Art]

To provide an enhanced user experience, a wearable device may provide various services. The wearable device may operate while being worn on a part of a body of a user. For example, the wearable device may be AR glasses and/or a head-mounted device (HMD). The wearable device may identify gaze information representing a gaze direction of eyes of the user by using a camera for tracking the eyes of the user to provide various services to the user. The wearable device may be required to perform calibration of the gaze information to improve user convenience.

The above-described information may be provided as related art for the purpose of helping the understanding of the present disclosure. No assertion or determination is raised as to whether any of the above-described content may be applied as prior art related to the present disclosure.

### [Disclosure]

### [Technical Solution]

A wearable device is disclosed. According to an embodiment, the wearable device may comprise a display system including a first display and a second display, and a camera system including a plurality of cameras. The camera system may be configured to capture images of eyes of a user while the wearable device is worn on the user. The wearable device may comprise at least one processor comprising processing circuitry, and memory comprising one or more storage mediums storing instructions. The instructions, when executed by the at least one processor individually or collectively, may cause the wearable device to display a visual object through the display system. The visual object may be associated with a gaze input region having a first size. The instructions, when executed by the at least one processor individually or collectively, may cause the wearable device to, in a case that identified gaze information falls within the gaze input region, provide visual feedback with respect to the visual object. The instructions, when executed by the at least one processor individually or collectively, may cause the wearable device to, in a case that calibration related to the gaze information is to be performed in a state of displaying the visual object, reduce a size of the gaze input region associated with the visual object from the first size to a second size, generate calibration information based on the gaze information of the user staring at the visual object while the size of the gaze input region is reduced, and after the calibration information is generated, increase the size of the gaze input region associated with the visual object from the second size.

A wearable device is disclosed. According to an embodiment, the wearable device may comprise a display, one or more cameras configured to track eyes of a user wearing the wearable device, at least one processor comprising processing circuitry, and memory comprising one or more storage mediums storing instructions. The instructions, when executed by the at least one processor individually or collectively, may cause the wearable device to display a plurality of visual objects on the display. The plurality of visual objects may include gaze input regions respectively formed on the plurality of visual objects for providing visual feedback with respect to a gaze of the user which is facing the plurality of visual objects. The instructions, when executed by the at least one processor individually or collectively, may cause the wearable device to, in a state of displaying the plurality of visual objects, determine whether to calibrate gaze information related to the gaze determined based on the one or more cameras. The instructions, when executed by the at least one processor individually or collectively, may cause the wearable device to reduce sizes of each of the gaze input regions respectively formed on the visual objects based on determining to calibrate the gaze information. The instructions, when executed by the at least one processor individually or collectively, may cause the wearable device to generate calibration information to be used to calibrate the gaze information using the gaze information detected while providing the visual feedback using the sizes which are reduced. The instructions, when executed by the at least one processor individually or collectively, may cause the wearable device to obtain the gaze information calibrated by applying the generated calibration information to the gaze information. The instructions, when executed by the at least one processor individually or collectively, may cause the wearable device to expand the sizes of the gaze input regions to provide visual feedback with respect to the gaze through the gaze information calibrated using the calibration information.

A method of a wearable device is disclosed. According to an embodiment, the method of the wearable device may comprise displaying a plurality of visual objects on a display of the wearable device. The plurality of visual objects may include gaze input regions respectively formed on the plurality of visual objects for providing visual feedback with respect to a gaze of the user which is facing the plurality of visual objects. The method may comprise, in a state of displaying the plurality of visual objects, determining whether to calibrate gaze information related to the gaze determined based on one or more cameras of the wearable device configured to track eyes of a user wearing the wearable device. The method may comprise reducing sizes of each of the gaze input regions respectively formed on the visual objects based on determining to calibrate the gaze information. The operation may comprise generating calibration information to be used to calibrate the gaze information using the gaze information detected while providing the visual feedback using the sizes which are reduced. The method may comprise obtaining the gaze information calibrated by applying the generated calibration information to the gaze information. The method may comprise expanding the sizes of the gaze input regions to provide visual feedback with respect to the gaze through the gaze information calibrated using the calibration information.

A non-transitory computer readable storage medium is disclosed. According to an embodiment, in the non-transitory computer readable storage medium storing one or more programs, the one or more programs may include instructions that, when executed by at least one processor of a wearable device with a display and one or more cameras configured to track eyes of a user wearing the wearable device, cause the wearable device to display a plurality of visual objects on the display. The plurality of visual objects may include gaze input regions respectively formed on the plurality of visual objects for providing visual feedback with respect to a gaze of the user which is facing the plurality of visual objects. The one or more programs, when executed by the at least one processor, may include instructions that cause the wearable device to, in a state of displaying the plurality of visual objects, determine whether to calibrate gaze information related to the gaze determined based on the one or more cameras. The one or more programs, when executed by the at least one processor, may include instructions that cause the wearable device to reduce sizes of each of the gaze input regions respectively formed on the visual objects based on determining to calibrate the gaze information. The one or more programs, when executed by the at least one processor, may include instructions that cause the wearable device to generate calibration information to be used to calibrate the gaze information using the gaze information detected while providing the visual feedback using the sizes which are reduced. The one or more programs, when executed by the at least one processor, may include instructions that cause the wearable device to expand the sizes of the gaze input regions by using the calibration information to provide visual feedback with respect to the gaze through the calibrated gaze information.

### [Description of the Drawings]

FIG. 1 is a block diagram of an electronic device in a network environment according to an embodiment.
FIGS. 2A and 2B illustrate an example of a perspective view of a wearable device according to an embodiment.
FIGS. 3A and 3B illustrate an example of an exterior of a wearable device according to an embodiment.
FIG. 4 illustrates an example of a block diagram of a wearable device according to an embodiment.
FIG. 5 illustrates a portion of a screen displayed through a display of an exemplary wearable device.
FIGS. 6A, 6B, 6C, 6D, and 6E illustrate an operation of an exemplary wearable device for calibration of gaze information.
FIG. 7 is a flow chart illustrating an operation of an exemplary wearable device for calibration of gaze information.
FIG. 8 is a flow chart illustrating an operation of an exemplary wearable device for calibration of gaze information.
FIGS. 9A, 9B, and 9C illustrate an operation of an exemplary wearable device for providing visual feedback.
FIG. 10 is a graph illustrating a location of a plurality of prediction points of a gaze of a user on a display of an exemplary wearable device over time.
FIG. 11 is a graph illustrating a relationship between an error value corresponding to calibration information of an exemplary wearable device and a padding value of gaze input regions.
FIG. 12 illustrates a portion of a screen displayed through a display of an exemplary wearable device.

### [Mode for Invention]

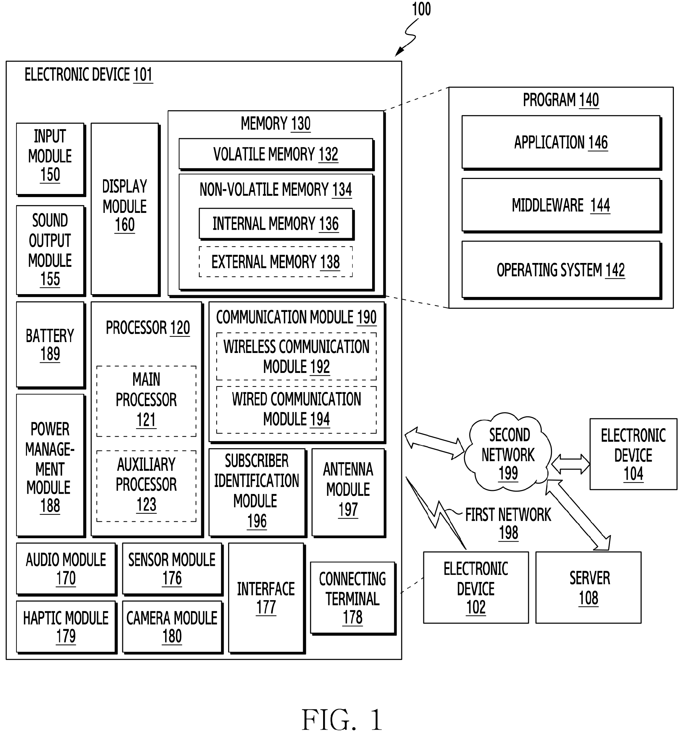

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

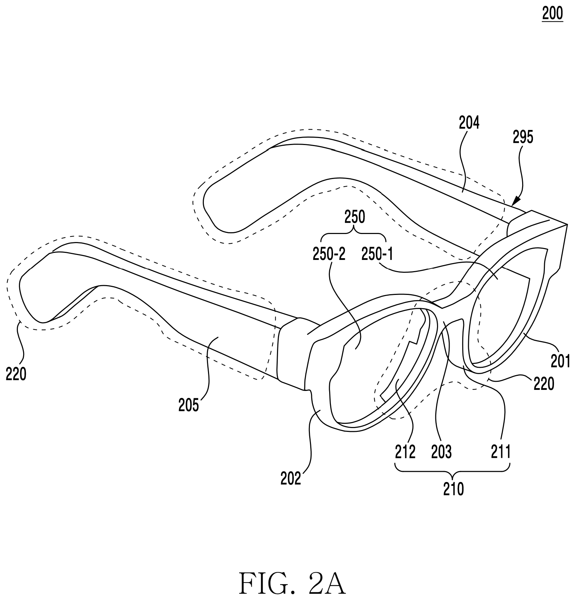

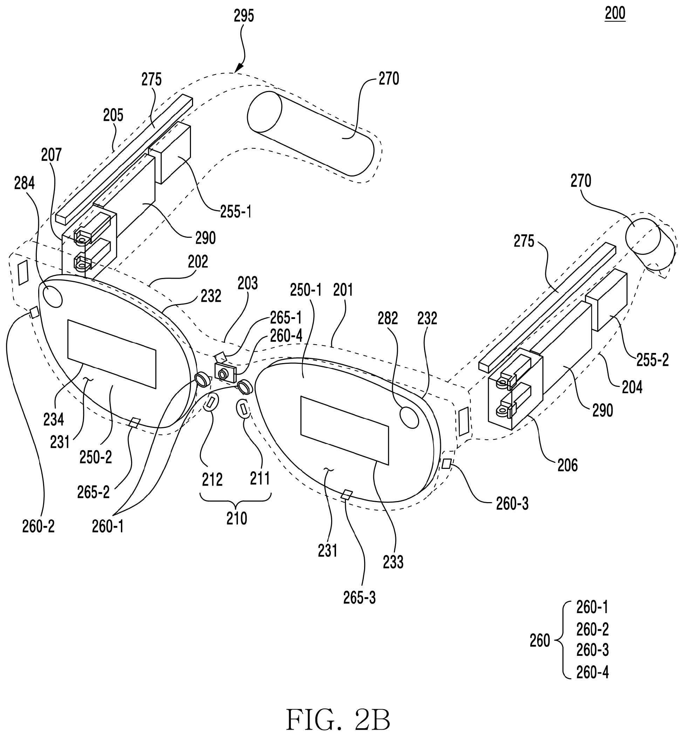

FIGS. 2A and 2B illustrate an example of a perspective view of a wearable device according to an embodiment.

According to an embodiment, a wearable device 200 may have a form of glasses that is wearable on a body part (e.g., head) of a user. The wearable device 200 of FIGS. 2A to 2B may be an example of the electronic device 101 of FIG. 1. The wearable device 200 may include a head-mounted display (HMD). For example, a housing of the wearable device 200 may include a flexible material such as rubber and/or silicone having a form closely attached to a portion of the user's head (for example, a portion of a face surrounding two eyes). For example, the housing of the wearable device 200 may include one or more straps able to be twined around the user's head, and/or one or more temples attachable to ears of the head.

Referring to FIG. 2A, according to an embodiment, the wearable device 200 may include at least one display 250 and a frame 295 supporting the at least one display 250.

According to an embodiment, the wearable device 200 may be wearable on a portion of the user's body. The wearable device 200 may provide augmented reality (AR), virtual reality (VR), or mixed reality (MR) combining the augmented reality and the virtual reality to a user wearing the wearable device 200. For example, the wearable device 200 may display a virtual reality image provided from at least one optical device 282 and 284 of FIG. 2B on at least one display 250, in response to a user's preset gesture obtained through a motion recognition camera 260-2 and 260-3 of FIG. 2B.

According to an embodiment, the at least one display 250 may provide visual information to a user. For example, the at least one display 250 may include a transparent or translucent lens. The at least one display 250 may include a first display 250-1 and/or a second display 250-2 spaced apart from the first display 250-1. For example, the first display 250-1 and the second display 250-2 may be disposed at positions corresponding to the user's left and right eyes, respectively.

Referring to FIG. 2B, the at least one display 250 may provide visual information transmitted through a lens included in the at least one display 250 from ambient light to a user and other visual information distinguished from the visual information. The lens may be formed based on at least one of a fresnel lens, a pancake lens, or a multi-channel lens. For example, the at least one display 250 may include a first surface 231 and a second surface 232 opposite to the first surface 231. A display area may be formed on the second surface 232 of at least one display 250. When the user wears the wearable device 200, ambient light may be transmitted to the user by being incident on the first surface 231 and being penetrated through the second surface 232. According to an embodiment, the at least one display 250 may display an augmented reality image in which a virtual reality image provided by the at least one optical device 282 and 284 is combined with a reality screen transmitted through ambient light, on a display area formed on the second surface 232.

In an embodiment, the at least one display 250 may include at least one waveguide 233 and 234 that transmits light transmitted from the at least one optical device 282 and 284 by diffracting to the user. The at least one waveguide 233 and 234 may be formed based on at least one of glass, plastic, or polymer. A nano pattern may be formed on at least a portion of the outside or inside of the at least one waveguide 233 and 234. The nano pattern may be formed based on a grating structure having a polygonal or curved shape. Light incident to an end of the at least one waveguide 233 and 234 may be propagated to another end of the at least one waveguide 233 and 234 by the nano pattern. The at least one waveguide 233 and 234 may include at least one of at least one diffraction element (e.g., a diffractive optical element (DOE), a holographic optical element (HOE)), and a reflection element (e.g., a reflection mirror). For example, the at least one waveguide 233 and 234 may be disposed in the wearable device 200 to guide a screen displayed by the at least one display 250 to the user's eyes. For example, the screen may be transmitted to the user's eyes based on total internal reflection (TIR) generated in the at least one waveguide 233 and 234.

The wearable device 200 may analyze an object included in a real image collected through a photographing camera 260-4, combine with a virtual object corresponding to an object that becomes a subject of augmented reality provision among the analyzed object, and display on the at least one display 250. The virtual object may include at least one of text and images for various information associated with the object included in the real image. The wearable device 200 may analyze the object based on a multi-camera such as a stereo camera. For the object analysis, the wearable device 200 may execute space recognition (e.g., simultaneous localization and mapping (SLAM)) using the multi-camera and/or time-of-flight (ToF). The user wearing the wearable device 200 may watch an image displayed on the at least one display 250.

According to an embodiment, a frame 295 may be configured with a physical structure in which the wearable device 200 may be worn on the user's body. According to an embodiment, the frame 295 may be configured so that when the user wears the wearable device 200, the first display 250-1 and the second display 250-2 may be positioned corresponding to the user's left and right eyes. The frame 295 may support the at least one display 250. For example, the frame 295 may support the first display 250-1 and the second display 250-2 to be positioned at positions corresponding to the user's left and right eyes.

Referring to FIG. 2A, according to an embodiment, the frame 295 may include an area 220 at least partially in contact with the portion of the user's body in case that the user wears the wearable device 200. For example, the area 220 of the frame 295 in contact with the portion of the user's body may include an area in contact with a portion of the user's nose, a portion of the user's ear, and a portion of the side of the user's face that the wearable device 200 contacts. According to an embodiment, the frame 295 may include a nose pad 210 that is contacted on the portion of the user's body. When the wearable device 200 is worn by the user, the nose pad 210 may be contacted on the portion of the user's nose. The frame 295 may include a first temple 204 and a second temple 205, which are contacted on another portion of the user's body that is distinct from the portion of the user's body.

For example, the frame 295 may include a first rim 201 surrounding at least a portion of the first display 250-1, a second rim 202 surrounding at least a portion of the second display 250-2, a bridge 203 disposed between the first rim 201 and the second rim 202, a first pad 211 disposed along a portion of the edge of the first rim 201 from one end of the bridge 203, a second pad 212 disposed along a portion of the edge of the second rim 202 from the other end of the bridge 203, the first temple 204 extending from the first rim 201 and fixed to a portion of the wearer's ear, and the second temple 205 extending from the second rim 202 and fixed to a portion of the ear opposite to the ear. The first pad 211 and the second pad 212 may be in contact with the portion of the user's nose, and the first temple 204 and the second temple 205 may be in contact with a portion of the user's face and the portion of the user's ear. The temples 204 and 205 may be rotatably connected to the rim through hinge units 206 and 207 of FIG. 2B. The first temple 204 may be rotatably connected with respect to the first rim 201 through the first hinge unit 206 disposed between the first rim 201 and the first temple 204. The second temple 205 may be rotatably connected with respect to the second rim 202 through the second hinge unit 207 disposed between the second rim 202 and the second temple 205. According to an embodiment, the wearable device 200 may identify an external object (e.g., a user's fingertip) touching the frame 295 and/or a gesture performed by the external object by using a touch sensor, a grip sensor, and/or a proximity sensor formed on at least a portion of the surface of the frame 295.

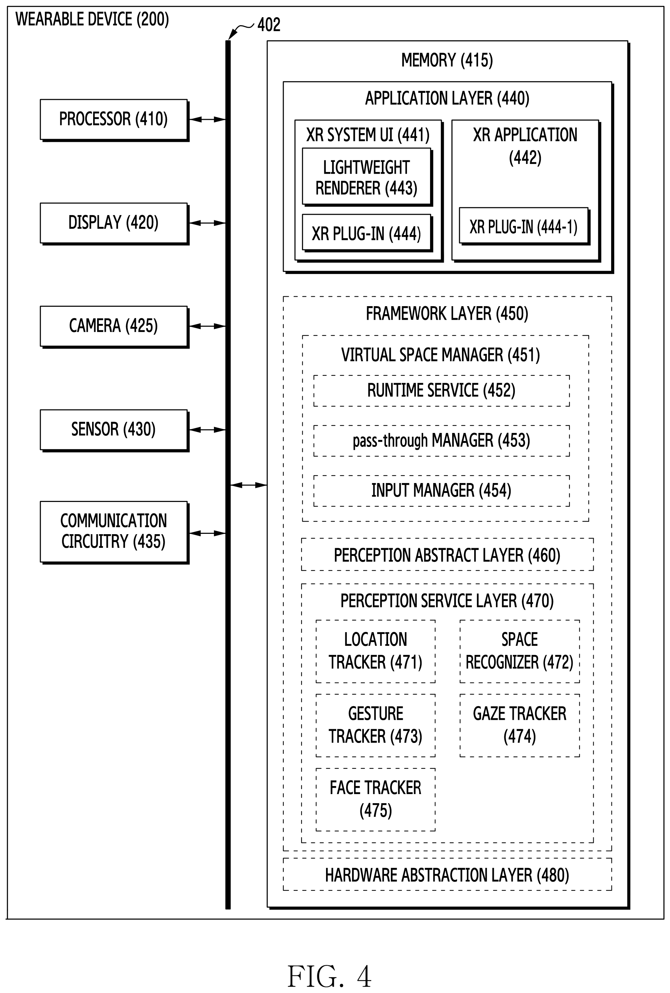

According to an embodiment, the wearable device 200 may include hardware (e.g., hardware to be described later based on the block diagram of FIG. 4) that performs various functions. For example, the hardware may include a battery module 270, an antenna module 275, the at least one optical device 282 and 284, speakers (e.g., speakers 255-1 and 255-2), a microphone (e.g., microphones 265-1, 265-2, and 265-3), a light emitting module (not illustrated), and/or a printed circuit board (PCB) 290 (e.g., printed circuit board). Various hardware may be disposed in the frame 295.

According to an embodiment, the microphone (e.g., the microphones 265-1, 265-2, and 265-3) of the wearable device 200 may obtain a sound signal, by being disposed on at least a portion of the frame 295. The first microphone 265-1 disposed on the bridge 203, the second microphone 265-2 disposed on the second rim 202, and the third microphone 265-3 disposed on the first rim 201 are illustrated in FIG. 2B, but the number and disposition of the microphone 265 are not limited to an embodiment of FIG. 2B. In case that the number of the microphone 265 included in the wearable device 200 is two or more, the wearable device 200 may identify a direction of the sound signal by using a plurality of microphones disposed on different portions of the frame 295.

According to an embodiment, the at least one optical device 282 and 284 may project a virtual object on the at least one display 250 in order to provide various image information to the user. For example, the at least one optical device 282 and 284 may be a projector. The at least one optical device 282 and 284 may be disposed adjacent to the at least one display 250 or may be included in the at least one display 250 as a portion of the at least one display 250. According to an embodiment, the wearable device 200 may include a first optical device 282 corresponding to the first display 250-1, and a second optical device 284 corresponding to the second display 250-2. For example, the at least one optical device 282 and 284 may include the first optical device 282 disposed at a periphery of the first display 250-1 and the second optical device 284 disposed at a periphery of the second display 250-2. The first optical device 282 may transmit light to the first waveguide 233 disposed on the first display 250-1, and the second optical device 284 may transmit light to the second waveguide 234 disposed on the second display 250-2.

In an embodiment, a camera 260 may include the photographing camera 260-4, an eye tracking camera (ET CAM) 260-1, and/or the motion recognition camera 260-2 and 260-3. The photographing camera 260-4, the eye tracking camera 260-1, and the motion recognition camera 260-2 and 260-3 may be disposed at different positions on the frame 295 and may perform different functions. The eye tracking camera 260-1 may output data indicating a position of eye or a gaze of the user wearing the wearable device 200. For example, the wearable device 200 may detect the gaze from an image including the user's pupil obtained through the eye tracking camera 260-1. The wearable device 200 may identify an object (e.g., a real object, and/or a virtual object) focused by the user, by using the user's gaze obtained through the eye tracking camera 260-1. The wearable device 200 identifying the focused object may execute a function (e.g., gaze interaction) for interaction between the user and the focused object. The wearable device 200 may represent a portion corresponding to eye of an avatar indicating the user in the virtual space, by using the user's gaze obtained through the eye tracking camera 260-1. The wearable device 200 may render an image (or a screen) displayed on the at least one display 250, based on the position of the user's eye. For example, visual quality (e.g., resolution, brightness, saturation, grayscale, and PPI) of a first area related to the gaze within the image and visual quality of a second area distinguished from the first area may be different. The wearable device 200 may obtain an image having the visual quality of the first area matching the user's gaze and the visual quality of the second area by using foveated rendering. For example, when the wearable device 200 supports an iris recognition function, user authentication may be performed based on iris information obtained using the eye tracking camera 260-1. An example in which the eye tracking camera 260-1 is disposed toward the user's right eye is illustrated in FIG. 2B, but the embodiment is not limited thereto, and the eye tracking camera 260-1 may be disposed alone toward the user's left eye or may be disposed toward two eyes.

In an embodiment, the photographing camera 260-4 may photograph a real image or background to be matched with a virtual image in order to implement the augmented reality or mixed reality content. The photographing camera 260-4 may be used to obtain an image having a high resolution based on a high resolution (HR) or a photo video (PV). The photographing camera 260-4 may photograph an image of a specific object existing at a position viewed by the user and may provide the image to the at least one display 250. The at least one display 250 may display one image in which a virtual image provided through the at least one optical device 282 and 284 is overlapped with information on the real image or background including an image of the specific object obtained by using the photographing camera 260-4. The wearable device 200 may compensate for depth information (e.g., a distance between the wearable device 200 and an external object obtained through a depth sensor), by using an image obtained through the photographing camera 260-4. The wearable device 200 may perform object recognition through an image obtained using the photographing camera 260-4. The wearable device 200 may perform a function (e.g., auto focus (AF)) of focusing an object (or subject) within an image and/or an optical image stabilization (OIS) function (e.g., an anti-shaking function) by using the photographing camera 260-4. While displaying a screen representing a virtual space on the at least one display 250, the wearable device 200 may perform a pass through function for displaying an image obtained through the photographing camera 260-4 overlapping at least a portion of the screen. In an embodiment, the photographing camera 260-4 may be disposed on the bridge 203 disposed between the first rim 201 and the second rim 202.

The eye tracking camera 260-1 may implement a more realistic augmented reality by matching the user's gaze with the visual information provided on the at least one display 250, by tracking the gaze of the user wearing the wearable device 200. For example, when the user looks at the front, the wearable device 200 may naturally display environment information associated with the user's front on the at least one display 250 at a position where the user is positioned. The eye tracking camera 260-1 may be configured to capture an image of the user's pupil in order to determine the user's gaze. For example, the eye tracking camera 260-1 may receive gaze detection light reflected from the user's pupil and may track the user's gaze based on the position and movement of the received gaze detection light. In an embodiment, the eye tracking camera 260-1 may be disposed at a position corresponding to the user's left and right eyes. For example, the eye tracking camera 260-1 may be disposed in the first rim 201 and/or the second rim 202 to face the direction in which the user wearing the wearable device 200 is positioned.

The motion recognition camera 260-2 and 260-3 may provide a specific event to the screen provided on the at least one display 250 by recognizing the movement of the whole or portion of the user's body, such as the user's torso, hand, or face. The motion recognition camera 260-2 and 260-3 may obtain a signal corresponding to motion by recognizing the user's motion (e.g., gesture recognition), and may provide a display corresponding to the signal to the at least one display 250. The processor may identify a signal corresponding to the operation and may perform a preset function based on the identification. The motion recognition camera 260-2 and 260-3 may be used to perform simultaneous localization and mapping (SLAM) for 6 degrees of freedom pose (6 dof pose) and/or a space recognition function using a depth map. The processor may perform a gesture recognition function and/or an object tracking function, by using the motion recognition camera 260-2 and 260-3. In an embodiment, the motion recognition camera 260-2 and camera 260-3 may be disposed on the first rim 201 and/or the second rim 202.

The camera 260 included in the wearable device 200 are not limited to the above-described eye tracking camera 260-1 and the motion recognition camera 260-2 and 260-3. For example, the wearable device 200 may identify an external object included in a field of view (FoV) by using a camera disposed toward the user's FoV. The wearable device 200 identifying the external object may be performed based on a sensor for identifying a distance between the wearable device 200 and the external object, such as a depth sensor and/or a time of flight (ToF) sensor. The camera 260 disposed toward the FoV may support an autofocus (AF) function and/or an optical image stabilization (OIS) function. For example, in order to obtain an image including a face of the user wearing the wearable device 200, the wearable device 200 may include the camera 260 (e.g., a face tracking (FT) camera) disposed toward the face.

Although not illustrated, the wearable device 200 according to an embodiment may further include a light source (e.g., LED) that emits light toward a subject (e.g., user's eyes, face, and/or an external object in the FoV) photographed by using the camera 260. The light source may include an LED having an infrared wavelength. The light source may be disposed on at least one of the frame 295, and the hinge units 206 and 207.

According to an embodiment, the battery module 270 may supply power to electronic components of the wearable device 200. In an embodiment, the battery module 270 may be disposed in the first temple 204 and/or the second temple 205. For example, the battery module 270 may be a plurality of battery modules 270. The plurality of battery modules 270, respectively, may be disposed on each of the first temple 204 and the second temple 205. In an embodiment, the battery module 270 may be disposed at an end of the first temple 204 and/or the second temple 205.

The antenna module 275 may transmit the signal or power to the outside of the wearable device 200 or may receive the signal or power from the outside. In an embodiment, the antenna module 275 may be disposed in the first temple 204 and/or the second temple 205. For example, the antenna module 275 may be disposed close to one surface of the first temple 204 and/or the second temple 205.

The speaker 255 may output a sound signal to the outside of the wearable device 200. A sound output module may be referred to as a speaker. In an embodiment, the speaker 255 may be disposed in the first temple 204 and/or the second temple 205 in order to be disposed adjacent to the ear of the user wearing the wearable device 200. For example, the speaker 255 may include a second speaker 255-2 disposed adjacent to the user's left ear by being disposed in the first temple 204, and a first speaker 255-1 disposed adjacent to the user's right ear by being disposed in the second temple 205.

The light emitting module (not illustrated) may include at least one light emitting element. The light emitting module may emit light of a color corresponding to a specific state or may emit light through an operation corresponding to the specific state in order to visually provide information on a specific state of the wearable device 200 to the user. For example, when the wearable device 200 requires charging, it may emit red light at a constant cycle. In an embodiment, the light emitting module may be disposed on the first rim 201 and/or the second rim 202.

Referring to FIG. 2B, according to an embodiment, the wearable device 200 may include the printed circuit board (PCB) 290. The PCB 290 may be included in at least one of the first temple 204 or the second temple 205. The PCB 290 may include an interposer disposed between at least two sub PCBs. On the PCB 290, one or more hardware (e.g., hardware illustrated by different blocks of FIG. 4) included in the wearable device 200 may be disposed. The wearable device 200 may include a flexible PCB (FPCB) for interconnecting the hardware.

According to an embodiment, the wearable device 200 may include at least one of a gyro sensor, a gravity sensor, and/or an acceleration sensor for detecting the posture of the wearable device 200 and/or the posture of a body part (e.g., a head) of the user wearing the wearable device 200. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 200 may identify the user's motion and/or gesture performed to execute or stop a specific function of the wearable device 200 based on the IMU.

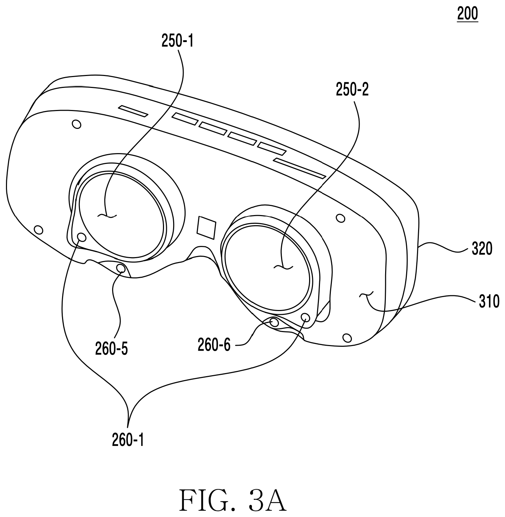

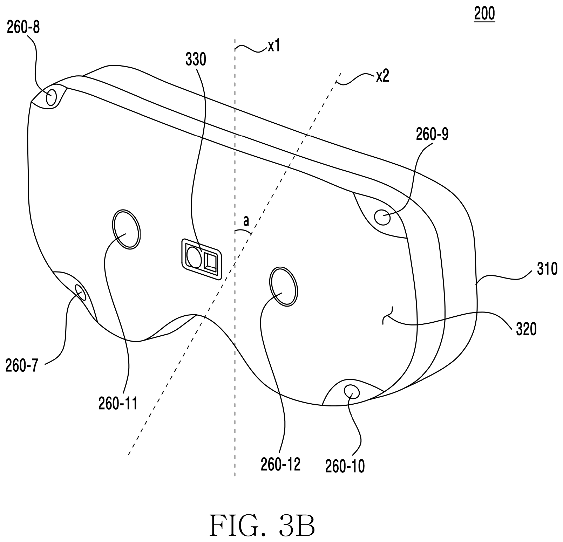

FIGS. 3A and 3B illustrate an example of the appearance of a wearable device according to an embodiment.

The wearable device 300 of FIGS. 3A and 3B may be an example of the electronic device 101 of FIG. 1 and the wearable device 200 of FIGS. 2A and 2B. According to an embodiment, an example of an exterior of a first surface 310 of a housing of the wearable device 200 may be illustrated in FIG. 3A, and an example of an exterior of a second surface 320 opposite to the first surface 310 may be illustrated in FIG. 3B.

Referring to FIG. 3A, according to an embodiment, the first surface 310 of the wearable device 200 may have an attachable shape on the user's body part (e.g., the user's face). Although not illustrated, the wearable device 200 may further include a strap for being fixed on the user's body part, and/or one or more temples (e.g., the first temple 204 and/or the second temple 205 of FIGS. 2A to 2B). A first display 250-1 for outputting an image to the left eye among the user's two eyes and a second display 250-2 for outputting an image to the right eye among the user's two eyes may be disposed on the first surface 310. The wearable device 200 may further include rubber or silicon packing, which are formed on the first surface 310, for preventing interference by light (e.g., ambient light) different from the light emitted from the first display 250-1 and the second display 250-2.

According to an embodiment, the wearable device 200 may include a camera 260-1 for photographing and/or tracking two eyes of the user adjacent to each of the first display 250-1 and the second display 250-2. The camera 260-1 may be referred to as the gaze tracking camera 260-1 of FIG. 2B. According to an embodiment, the wearable device 200 may include cameras 260-5 and 260-6 for photographing and/or recognizing the user's face. The cameras 260-5 and 260-6 may be referred to as a FT camera. The wearable device 200 may control an avatar representing a user in a virtual space, based on a motion of the user's face identified using the cameras 260-5 and 260-6. For example, the wearable device 200 may change a texture and/or a shape of a portion (e.g., a portion of an avatar representing a human face) of the avatar, by using information obtained by the cameras 260-5 and 260-6 (e.g., the FT camera) and representing the facial expression of the user wearing the wearable device 200.

Referring to FIG. 3B, a camera (e.g., cameras 260-7, 260-8, 260-9, 260-10, 260-11, and 260-12), and/or a sensor (e.g., the depth sensor 330) for obtaining information associated with the external environment of the wearable device 200 may be disposed on the second surface 320 opposite to the first surface 310 of FIG. 3A. For example, the cameras 260-7, 260-8, 260-9, and 260-10 may be disposed on the second surface 320 in order to recognize an external object. The cameras 260-7, 260-8, 260-9, and 260-10 may be referred to as the motion recognition cameras 260-2 and 260-3 of FIG. 2B.

For example, by using cameras 260-11 and 260-12, the wearable device 200 may obtain an image and/or video to be transmitted to each of the user's two eyes. The camera 260-11 may be disposed on the second surface 320 of the wearable device 200 to obtain an image to be displayed through the second display 250-2 corresponding to the right eye among the two eyes. The camera 260-12 may be disposed on the second surface 320 of the wearable device 200 to obtain an image to be displayed through the first display 250-1 corresponding to the left eye among the two eyes. The cameras 260-11 and 260-12 may be referred to as the photographing camera 260-4 of FIG. 2B.

According to an embodiment, the wearable device 200 may include the depth sensor 330 disposed on the second surface 320 in order to identify a distance between the wearable device 200 and the external object. By using the depth sensor 330, the wearable device 200 may obtain spatial information (e.g., a depth map) about at least a portion of the FoV of the user wearing the wearable device 200. According to an embodiment, the sensor 330 may be configured to detect an angle a between a reference axis x1 and an orientation axis x2 of the wearable device 200. The sensor 330 may detect inclination of the wearable device 200, based on the angle a. Although not illustrated, a microphone for obtaining sound outputted from the external object may be disposed on the second surface 320 of the wearable device 200. The number of microphones may be one or more according to embodiments.

FIG. 4 illustrates an example of a block diagram of a wearable device according to an embodiment.

Referring to FIG. 4, a wearable device 200 according to an embodiment may include at least one of a processor 410, memory 415, a display 420, a camera 425, a sensor 430, or communication circuitry 435. The processor 410, the memory 415, the display 420, the camera 425, the sensor 430, and the communication circuitry 435 may be electronically and/or operably coupled with each other by an electronical component such as a communication bus 402. A type and/or the number of hardware components included in the wearable device 200 is not limited to those illustrated in FIG. 4. For example, the wearable device 200 may include only some of the hardware components illustrated in FIG. 4. Elements (e.g., layers and/or modules) in the memory described below may be logically divided. However, it is not limited thereto.

The processor 410 of the wearable device 200 according to an embodiment may include a hardware component for processing data based on one or more instructions. The hardware component for processing data may include, for example, an arithmetic and logic unit (ALU), a field programmable gate array (FPGA), and/or a central processing unit (CPU). The number of processors 410 may be one or more. For example, the processor 410 may have a structure of a multi-core processor such as a dual core, a quad core, or a hexa core. For example, the processor 410 may be referred to as at least one processor.

Any function or operation described in the present specification may be processed by the at least one processor 410. According to an embodiment, the at least one processor 410 may include processing circuitry. The at least one processor 410 may include an application processor (AP) (e.g., a central processing unit (CPU)) and/or a communication processor (CP) (e.g., modem), but is not limited thereto. The at least one processor 410 may include a graphics processing unit (GPU), a neural processing unit (NPU) (e.g., an artificial intelligence (AI) chip), a wireless-fidelity (Wi-Fi) chip, a Bluetooth chip^{®}, a global positioning system (GPS) chip, a near field communication (NFC) chip, connectivity chips, a sensor controller, a touch controller, a fingerprint sensor controller, a display drive integrated circuit (DDI), an audio CODEC chip, a universal serial bus (USB) controller, a camera controller, an image processing IC, a microprocessor unit (MPU), a system on chip (SoC), an integrated circuitry (IC), or circuitry similar thereto.

The memory 415 of the wearable device 200 according to an embodiment may include a hardware component for storing data and/or instructions inputted to and/or outputted from the processor 410. The memory 415 may include, for example, volatile memory, such as a random-access memory (RAM), and/or non-volatile memory, such as a read-only memory (ROM). The volatile memory may include, for example, at least one of a dynamic RAM (DRAM), a static RAM (SRAM), a Cache RAM, and a pseudo SRAM (PSRAM). The non-volatile memory may include, for example, at least one of a programmable ROM (PROM), an erasable PROM (EPROM), an electrically erasable PROM (EEPROM), a flash memory, a hard disk, a compact disc, and an embedded multi media card (eMMC).

In an embodiment, the display 420 of the wearable device 200 may output visualized information to a user of the wearable device 200. For example, the display 420 may output visualized information to the user, by being controlled by the processor 410 including circuitry such as a graphic processing unit (GPU). The display 420 may include a flat panel display (FPD) and/or electronic paper. The FPD may include a liquid crystal display (LCD), a plasma display panel (PDP), and/or one or more light emitting diodes (LEDs). The LED may include an organic LED (OLED).

In an embodiment, the camera 425 of the wearable device 200 may include one or more optical sensors (e.g., a charged coupled device (CCD) sensor and a complementary metal oxide semiconductor (CMOS) sensor) that generate an electrical signal representing a color and/or brightness of light. A plurality of optical sensors included in the camera 425 may be disposed in a form of a two-dimensional array. The camera 425 may generate a two-dimensional frame data corresponding to light reaching the optical sensors of the two-dimensional array by obtaining electrical signals of each of the plurality of optical sensors substantially simultaneously. For example, photo data captured using the camera 425 may mean a two-dimensional frame data obtained from the camera 425. For example, video data captured using the camera 425 may mean a sequence of a plurality of two-dimensional frame data obtained from the camera 425 in accordance with a frame rate. The camera 425 may further include a flash light, disposed toward a direction in which the camera 425 receives light, for outputting light toward the direction.

In an embodiment, the wearable device 200 may include, as an example of the camera 425, a plurality of cameras disposed toward different directions. Among the plurality of cameras, a first camera may be referred to as a motion recognition camera (e.g., the motion recognition camera 260-2 and 260-3 of FIG. 2B), and a second camera may be referred to as a gaze tracking camera (e.g., the gaze tracking camera 260-1 of FIG. 2B). The wearable device 200 may identify a position, a shape, and/or a gesture of a hand by using an image obtained by using the first camera. The wearable device 200 may identify a direction of a gaze of a user wearing the wearable device 200 by using an image obtained by using the second camera. As an example, a direction toward which the first camera faces and a direction toward which the second camera faces may be opposite.

In an embodiment, the sensor 430 of the wearable device 200 may generate, from non-electronic information related to the wearable device 200, electrical information capable of being processed by the processor 410 and/or the memory 415 of the wearable device 200. The information may be referred to as sensor data. The sensor 430 may include a global positioning system (GPS) sensor for detecting a geographic location of the wearable device 200, an image sensor, an illuminance sensor and/or a time-of-flight (ToF) sensor, and an inertial measurement unit (IMU) for detecting a physical motion of the wearable device 200.

In an embodiment, the communication circuitry 435 of the wearable device 200 may include a hardware component for supporting transmission and/or reception of an electrical signal between the wearable device 200 and an external electronic device. The communication circuitry 435 may include, for example, at least one of a MODEM, an antenna, or an optic/electronic (O/E) converter. The communication circuitry 435 may support transmission and/or reception of an electrical signal based on various types of protocols, such as Ethernet, local area network (LAN), wide area network (WAN), wireless fidelity (WiFi), Bluetooth, Bluetooth Low Energy (BLE), ZigBee, long term evolution (LTE), 5G new radio (NR), and/or 6G.

According to an embodiment, in the memory 415 of the wearable device 200, one or more instructions (or commands) representing a calculation and/or an operation to be performed on data by the processor 410 of the wearable device 200 may be stored. A set of one or more instructions may be referred to as firmware, an operating system, a process, a routine, a sub-routine, and/or an application. For example, the wearable device 200 and/or the processor 410 may perform at least one of operations according to an embodiment described below, when a set of a plurality of instructions distributed in a form of an operating system, firmware, a driver, and/or an application is executed. Hereinafter, an application being installed in the wearable device 200 may mean that one or more instructions provided in a form of an application are stored in the memory 415, and that the one or more applications are stored in a format (e.g., a file having an extension specified by an operating system of the wearable device 200) executable by the processor 410. As an example, an application may include a program and/or a library associated with a service provided to the user.

Referring to FIG. 4, programs installed in the wearable device 200 may be classified into any one layer among different layers including an application layer 440, a framework layer 450, and/or a hardware abstraction layer (HAL) 480 based on a target. For example, in the hardware abstraction layer 480, programs (e.g., a module or a driver) designed to target hardware (e.g., the display 420, the camera 425, and/or the sensor 430) of the wearable device 200 may be classified. The framework layer 450 may be referred to as an XR framework layer in terms of including one or more programs for providing an extended reality (XR) service. For example, although FIG. 4 illustrates layers divided in the memory 415, the layers may be logically divided. However, it is not limited thereto. According to an embodiment, the layers may be stored in a specified area in the memory 415.

For example, in the framework layer 450, programs (e.g., a position tracker 471, a spatial perception unit 472, a gesture tracker 473, a gaze tracker 474, and/or a face tracker 475) designed to target at least one of the hardware abstraction layer 480 and/or the application layer 440 may be classified. The programs classified as the framework layer 450 may provide an application programming interface (API) executable based on another program.

For example, in the application layer 440, a program designed to target the user controlling the wearable device 200 may be classified. As an example of the programs classified as the application layer 440, an extended reality (XR) system user interface (UI) and/or an XR application 442 are exemplified, but an embodiment is not limited thereto. For example, the programs (e.g., a software application) classified as the application layer 440 may cause execution of a function supported by the programs classified as the framework layer 450 by calling an application programming interface (API).

For example, based on execution of the XR system UI 441, the wearable device 200 may display, on the display 420, one or more visual objects to perform interaction with a user for using a virtual space. The visual object may mean an object deployable in a screen for information transmission and/or interaction, such as text, an image, an icon, a video, a button, a checkbox, a radio button, a text box, a slider, and/or a table. The visual object may be referred to as a visual guide, a virtual object, a visual element, a UI element, a view object, and/or a view element. The wearable device 200 may provide a service capable of controlling functions available in the virtual space to the user based on the execution of the XR system UI 441.

Referring to FIG. 4, it is illustrated that a lightweight renderer 443 and/or an XR plug-in 444 are included in the XR system UI 441, but is not limited thereto. For example, the XR system UI 441 may cause execution of a function supported by the lightweight renderer 443 and/or the XR plug-in 444 included in the framework layer 450.

For example, the wearable device 200 may obtain a resource (e.g., an API, a system process, and/or a library) used to define, generate, and/or execute a rendering pipeline in which a partial change is allowed, based on execution of the lightweight renderer 443. The lightweight renderer 443 may be referred to as a lightweight render pipeline in terms of defining the rendering pipeline in which the partial change is allowed. The lightweight renderer 443 may include a renderer (e.g., a prebuilt renderer) built before execution of a software application. For example, the wearable device 200 may obtain a resource (e.g., an API, a system process, and/or a library) used to define, generate, and/or execute an entire rendering pipeline based on execution of the XR plug-in 444. The XR plug-in 444 may be referred to as an open XR native client in terms of defining (or setting) the entire rendering pipeline.

For example, the wearable device 200 may display, on the display 420, a screen representing at least a part of the virtual space based on execution of the XR application 442. An XR plug-in 444-1 included in the XR application 442 may may be referred to as the XR plug-in 444 of the XR system UI 441. Among descriptions of the XR plug-in 444-1, descriptions overlapping descriptions of the XR plug-in 444 may be omitted. The wearable device 200 may cause execution of a virtual space manager 451 based on execution of the XR application 442.

According to an embodiment, the wearable device 200 may provide a virtual space service based on the execution of the virtual space manager 451. For example, the virtual space manager 451 may include a platform (e.g., an Android platform) for supporting the virtual space service. Based on the execution of the virtual space manager 451, the wearable device 200 may display, on the display, a posture of a virtual object representing a posture of the user rendered by using data obtained via the sensor 430. The virtual space manager 451 may be referred to as a composition presentation manager (CPM).

For example, the virtual space manager 451 may include a runtime service 452. As an example, the runtime service 452 may be referred to as an OpenXR runtime module. Based on execution of the runtime service 452, the wearable device 200 may be used to provide at least one of a user pose prediction function, a frame timing function, and/or a spatial input function via the wearable device 200. As an example, the wearable device 200 may be used to perform rendering for the virtual space service to the user based on the execution of the runtime service 452. For example, based on the execution of the runtime service 452, an application (e.g., unity or OpenXR native application) may be implemented.

For example, the virtual space manager 451 may include a pass-through manager 453. Based on execution of the pass-through manager 453, the wearable device 200 may overlappingly display another screen representing a real space obtained via the camera 425 on at least a part of a screen while displaying the screen representing a virtual space on the display 420.

For example, the virtual space manager 451 may include an input manager 454. Based on execution of the input manager 454, the wearable device 200 may identify data (e.g., sensor data) obtained by executing one or more programs included in a perception service layer 470. The wearable device 200 may initiate execution of at least one of functions of the wearable device 200 by using the obtained data.

For example, the perception abstract layer 460 may be used for data exchange between the virtual space manager 451 and the perception service layer 470. In terms of being used for data exchange between the virtual space manager 451 and the perception service layer 470, the perception abstract layer 460 may be referred to as an interface. As an example, the perception abstract layer 460 may be referenced as OpenPX. The perception abstract layer 460 may be used for a perception client and a perception service.

According to an embodiment, the perception service layer 470 may include one or more programs for processing data obtained from the sensor 430 (or the camera 425). The one or more programs may include at least one of the position tracker 471, the spatial perception unit 472, the gesture tracker 473, the gaze tracker 474, and/or the face tracker 475. A type and/or the number of the one or more programs included in the perception service layer 470 is not limited to those illustrated in FIG. 4.

For example, based on execution of the position tracker 471, the wearable device 200 may identify a posture of the wearable device 200 using the sensor 430. Based on the execution of the position tracker 471, the wearable device 200 may identify a 6 degrees of freedom pose (6 dof pose) of the wearable device 200 by using data obtained using the camera 425 and the IMU. The position tracker 471 may be referred to as a head tracking (HeT) module (or a head tracker or a head tracking program).

For example, based on execution of the spatial perception unit 472, the wearable device 200 may be used to configure a surrounding environment of the wearable device 200 (or the user of the wearable device 200) into a three-dimensional virtual space. Based on the execution of the spatial perception unit 472, the wearable device 200 may reconstruct the surrounding environment of the wearable device 200 in three dimensions by using data obtained using the camera 425. The wearable device 200 may identify at least one of a plane, an inclination, and a step based on the surrounding environment of the wearable device 200 reconstructed in three dimensions based on the execution of the spatial perception unit 472. The spatial perception unit 472 may be referred to as a scene understanding (SU) module.

For example, the wearable device 200 may be used to identify (or perceive) a pose and/or a gesture of the hand of the user of the wearable device 200 based on execution of the gesture tracker 473. As an example, based on the execution of the gesture tracker 473, the wearable device 200 may identify the pose and/or the gesture of the hand of the user by using data obtained from the sensor 430. As an example, based on the execution of the gesture tracker 473, the wearable device 200 may identify the pose and/or the gesture of the hand of the user based on data (or an image) obtained using the camera. The gesture tracker 473 may be referred to as a hand tracking (HaT) module and/or a gesture tracking module.

For example, the wearable device 200 may identify (or track) movement of an eye of the user of the wearable device 200 based on execution of the gaze tracker 474. As an example, the wearable device 200 may identify the movement of the eye of the user by using data obtained from at least one sensor based on the execution of the gaze tracker 474. As an example, the wearable device 200 may identify the movement of the eye of the user based on data obtained using a camera (the gaze tracking camera 260-1 of FIGS. 2A and 2B) and/or an infrared light emitting diode (IR LED) based on the execution of the gaze tracker 474. The gaze tracker 474 may be referred to as an eye tracking (ET) module and/or a gaze tracking module.

For example, the perception service layer 470 of the wearable device 200 may further include the face tracker 475 for tracking a face of the user. For example, the wearable device 200 may identify (or track) movement of the face of the user and/or facial expression of the user based on execution of the face tracker 475. Based on the execution of the face tracker 475, the wearable device 200 may estimate the facial expression of the user based on the movement of the face of the user. As an example, based on the execution of the face tracker 475, the wearable device 200 may identify the movement of the face of the user and/or the facial expression of the user based on data (e.g., an image) obtained using a camera.

For embodiments described below, the wearable device 200 of FIG. 4 may be referenced. For example, the embodiments described below may be performed by the processor 410 of the wearable device 200 of FIG. 4.

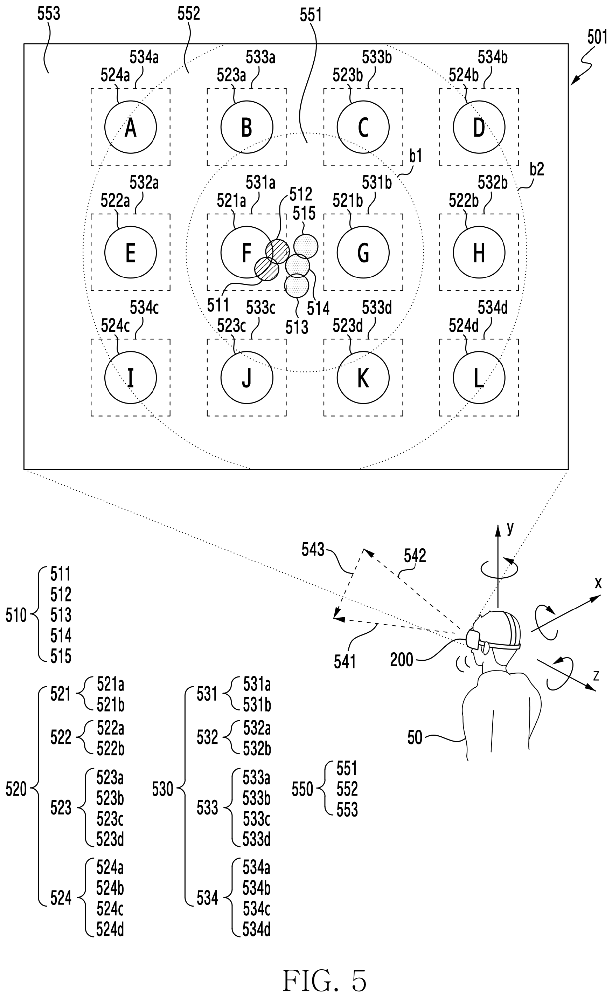

FIG. 5 illustrates a portion of a screen displayed through a display of an exemplary wearable device.

Referring to FIG. 5, a wearable device 200 may include a camera (e.g., the camera 425 of FIG. 4) disposed to face a forward direction of a user 50 while being worn by the user 50. The forward direction of the user 50 may include a direction in which a head of the user 50 and/or a gaze of the user 50 is directed. The wearable device 200 according to an embodiment may include a sensor (e.g., the sensor 430 of FIG. 4) for identifying motion of the head of the user 50 and/or the wearable device 200 while being worn by the user 50.

A processor (e.g., the processor 410 of FIG. 4) of the wearable device 200 may identify an angle of the wearable device 200 based on data of the sensor 430. For example, when referring together with FIG. 3B, the processor 410 may identify an angle a between an orientation axis x2 representing an orientation of the wearable device 200 and a reference axis x1 by using information obtained through the camera 425 and/or the sensor 430 of the wearable device 200. In order to provide a user interface (UI) based on virtual reality (VR), augmented reality (AR), and/or mixed reality (MR) to the user 50 wearing the wearable device 200, the processor 410 may control the camera 425 and/or the sensor 430. The UI may be related to a metaverse service and/or a notification service provided by the wearable device 200 and/or a server connected to the wearable device 200.

According to an embodiment, the processor 410 may execute a function related to augmented reality (AR) and/or mixed reality (MR). While the wearable device 200 is worn on the user 50, the processor 410 may include at least one lens disposed adjacent to an eye of the user 50. Ambient light passing through the lens may be combined (or mixed) with light emitted from a display (e.g., the display 420 of FIG. 4) of the wearable device 200. A display region of the display 420 may be formed within the lens through which the ambient light passes. Since the processor 410 combines the ambient light and the light emitted from the display 420, the user 50 may view an image in which a real object perceived by the ambient light and a virtual object (e.g., a plurality of visual objects 520) formed by the light emitted from the display 420 are mixed.

According to an embodiment, the wearable device 200 may execute a function related to video see-through (VST) and/or virtual reality (VR). While the wearable device 200 is worn on the user 50, the wearable device 200 may include a housing covering an eye of the user 50. While the wearable device 200 is worn on the user 50, the wearable device 200 may include the display 420 disposed on a first surface (e.g., the first surface 310 of FIG. 3A) facing the eye. The wearable device 200 may include the camera 425 (or the cameras 260-7, 260-8, 260-9, 260-10, 260-11, and 260-12 of FIG. 3B) disposed on a second surface (e.g., the second surface 320 of FIG. 3A) opposite to the first surface. By using the camera 425, the processor 410 may obtain frame images including ambient light. The processor 410 may output the frame images to the display 420 disposed on the first surface, allowing the user 50 to perceive the ambient light through the display 420. A display region of the display 420 disposed on the first surface may be formed by one or more pixels included in the display 420. The processor 410 may synthesize a virtual object in the frame images output through the display 420 to allow the user 50 to perceive the virtual object together with a real object perceived by the ambient light.

According to an embodiment, the wearable device 200 may provide an experience of the user 50 based on mixed reality (MR) by using a virtual space. The processor 410 of the wearable device 200 may perceive an external space (e.g., a real space) in which the wearable device 200 is included and generate a virtual space mapped to the external space. Spatial perception performed by the processor 410 may include simultaneous localization and mapping (SLAM) and/or spatial mapping (e.g., scene understanding).

According to an embodiment, the processor 410 may be configured to determine a location of a plurality of prediction points 510 on the display 420 for expecting a direction of a gaze of the user 50 by using gaze information related to the gaze of the user 50. For example, the processor 410 may be configured to obtain gaze information related to the gaze of the user 50 wearing the wearable device 200 based on video information obtained through the camera 425 of the wearable device 200. For example, the processor 410 may be configured to obtain gaze information related to the gaze of the user 50 wearing the wearable device 200 through the sensor 430 in the wearable device 200 configured to detect an angle between an orientation axis (e.g., the orientation axis x2 of FIG. 3B) of the wearable device 200 and the reference axis x1. However, the above-described embodiments are exemplary and are not limited thereto. According to an embodiment, gaze information related to a gaze may include information based on a location of an eye, a location of a pupil, an angle of the gaze, a direction of the gaze, a gaze vector, and/or a gaze point.

For example, the processor 410 may be configured to determine the location of the plurality of prediction points 510 on the display 420 for predicting the gaze of the user 50 based on the gaze information related to the gaze of the user 50. For example, the processor 410 may change the location of the plurality of prediction points 510 on a screen 501, within the screen 501 provided through the display 420, through the gaze information obtained using the camera 425 and/or the sensor 430. The processor 410 may change the location of the plurality of prediction points 510 according to movement of the user 50 (e.g., movement of the gaze or rotation of the head wearing the wearable device 200) for a gaze input to the plurality of visual objects 520 displayed on the display 420, by determining the location of the plurality of prediction points 510 on the display 420 using the gaze information.

According to an embodiment, the processor 410 may be configured to display the plurality of visual objects 520 on the display 420 of the wearable device 200. The plurality of visual objects 520 may include gaze input regions 530 respectively formed on the plurality of visual objects for providing visual feedback with respect to a gaze of the user 50 facing the plurality of visual objects. For example, the processor 410 may control the display 420 to display the plurality of visual objects 520 on the screen 501 based on receiving a user input for displaying the plurality of visual objects 520. For example, at least some of the visual objects 520 displayed through the display 420 may correspond to an image with respect to a real object obtained through the camera 425. For example, at least some of the visual objects 520 obtained through the display 420 may be a virtual object for receiving a user input. However, the above-mentioned embodiments are exemplary and are not limited thereto.

For example, the plurality of visual objects 520 may respectively form the gaze input regions 530 for providing visual feedback to the user 50 based on the gaze of the user 50 facing the plurality of visual objects. The gaze input regions 530 may be respectively set or formed on the plurality of visual objects 520. Each of the gaze input regions 530 may have an area within a specified range surrounding a respective one of the plurality of visual objects 520 to receive a user input to the plurality of visual objects 520 based on the gaze of the user 50. A size of each of the gaze input regions 530 may be determined by a padding value between a boundary of the plurality of visual objects 520 and a boundary of the gaze input regions 530, but is not limited thereto. According to an embodiment, a padding value of the gaze input regions 530 may mean a distance spaced apart from a minimum gaze input region (or reference input region) of the gaze input regions 530. For example, the minimum gaze input region (or reference gaze input region) of the gaze input regions 530 may be larger or smaller than a region of the plurality of visual objects 520.

For example, the gaze input regions 530 may be regions for providing visual feedback to the user 50 based on the location of the plurality of prediction points 510 on the display 420 for expecting a direction of a gaze of the user 50 wearing the wearable device 200. For example, the processor 410 may control the display 420 to display the visual objects 520 for receiving a user input based on the location of the plurality of prediction points 510. The processor 410 may be configured to identify a user input to the plurality of visual objects 520 based on the location of the plurality of prediction points 510 for expecting a direction of a gaze of the user 50 with respect to the gaze input regions 530 respectively formed on the plurality of visual objects 520.

For example, the processor 410 may locate the plurality of prediction points 510 around a visual object 521a and a gaze input region 531a of the visual object 521a for a user input to the visual object 521a among the plurality of visual objects 520 based on the gaze information determined by the camera 425. For example, the processor 410 may identify the plurality of prediction points 510 located to at least partially overlap the gaze input region 531a. The processor 410 may receive a user input to the visual object 521a corresponding to the gaze input region 531a based on identifying the plurality of prediction points 510 located to at least partially overlap the gaze input region 531a. The processor 410 may control the display 420 to display, on the display 420, visual information provided through the visual object 521a based on receiving the user input to the visual object 521a. For example, the processor 410 may switch the screen 501 of the display 420 to display, on the display 420, contents provided through the visual object 521a corresponding to the gaze input region 531a based on the plurality of prediction points 510 located to at least partially overlap the gaze input region 531a. However, the above-mentioned embodiment is exemplary and is not limited thereto.

The processor 410 may receive a user input to each of the plurality of visual objects 520 respectively corresponding to the gaze input regions 530 based on the plurality of prediction points 510 located to overlap each of the gaze input regions 530 on the display 420. The processor 410 may control the display 420 to display a screen related to each of the plurality of visual objects 520 based on the user input received to each of the plurality of visual objects 520. For example, as illustrated, the processor 410 may control the display 420 to display visual objects 521a, 521b, 522a, 522b, 523a, 523b, 523c, 523d, 524a, 524b, 524c, and 524d on the screen 501 of the display 420. On the display, gaze input regions 531a, 531b, 532a, 532b, 533a, 533b, 533c, 533d, 534a, 534b, 534c, and 534d respectively corresponding to the visual objects 521a, 521b, 522a, 522b, 523a, 523b, 523c, 523d, 524a, 524b, 524c, and 524d may be set.

According to an embodiment, the processor 410 may determine a location of a gaze prediction point (not illustrated) on the display 420 corresponding to the gaze of the user 50 by using the location of the plurality of prediction points 510. For example, the processor 410 may identify the location of the gaze prediction point by using location information of each of the plurality of prediction points 510. The location of the gaze prediction point may be calculated as an average value of the locations of the plurality of prediction points 510, but is not limited thereto. For example, reception of a user input through the plurality of visual objects 520 to the processor 410 may be determined according to the location of the gaze prediction point determined by the plurality of prediction points 510. For example, prediction points 511 and 512 among the plurality of prediction points 510 may be located to overlap the gaze input region 531a of the visual object 521a. Prediction points 513, 514, and 515 among the plurality of prediction points 510 may be located outside the gaze input region 531a. The location of the gaze prediction point of the user 50 determined by an average value of the location of the prediction points 511 and 512 and the location of the prediction points 513, 514, and 515 may be located outside the gaze input region 531a. Since the gaze prediction point is located outside the gaze input region 531a, a user input through the visual object 521a to the processor 410 may not be received. However, the above-mentioned embodiments are exemplary and are not limited thereto.

According to an embodiment, the processor 410 may identify whether to calibrate gaze information related to the gaze of the user 50 determined based on the camera 425 in a state in which the plurality of visual objects 520 are displayed on the display 420. For example, due to an external factor of the wearable device 200 (e.g., slippage due to an external impact applied to the wearable device 200), a direction 541 of an actual gaze of the user 50 and a direction 542 of the gaze predicted by the wearable device 200 may vary significantly. For example, a location of a gaze prediction point corresponding to the direction 541 of the actual gaze of the user 50 may be located to overlap the gaze input region 531a for a user input to the visual object 521a. A location of a gaze prediction point corresponding to the direction 542 of the gaze of the user 50 predicted by the wearable device 200 may be located outside the gaze input region 531a according to the gaze information determined by the camera 425. The wearable device 200 may be required to perform an operation for calibrating the gaze information to calibrate the location of the gaze prediction point predicted by the wearable device 200 to the location of the gaze prediction point corresponding to the actual gaze of the user 50.

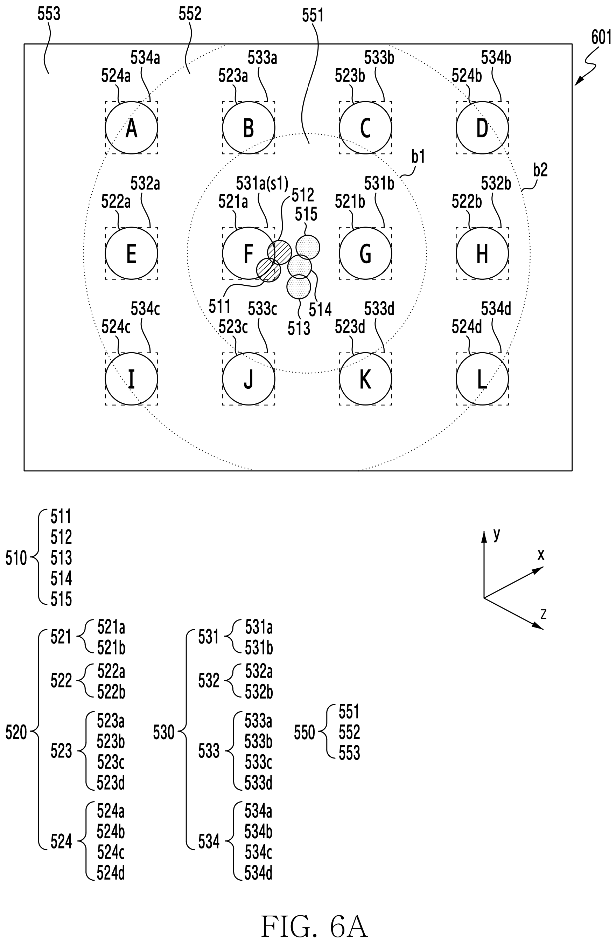

According to an embodiment, the processor 410 may obtain an error value between the location of the gaze prediction point corresponding to the direction 541 of the actual gaze of the user 50 and the location of the gaze prediction point corresponding to the direction 542 of the gaze of the user 50 predicted by the wearable device 200, based on a change in location of the plurality of prediction points 510 (or the gaze prediction point determined by the plurality of prediction points 510). The error value may be obtained from, for example, a direction 543 between the direction 541 and the direction 542. The processor 410 may be configured to calibrate, for example, the gaze information to be used for determining the location of the gaze prediction point by using the error value. For example, the processor 410 may execute a function for calibrating the gaze information through a session for storing the gaze information based on determining calibration of the gaze information. When the function for calibrating the gaze information is executed through the session for storing the gaze information, a considerable amount of time may be required for calibration of the gaze information. In order to reduce time required for calibration of the gaze information, the wearable device 200 may be required to perform calibration by using a plurality of partition regions 550 on the display 420 in which the gaze prediction point is located, and/or sizes of each of the gaze input regions 530. An operation for calibrating the gaze information by using the plurality of partition regions 550 and/or the sizes of each of the gaze input regions 530 will be described below with reference to FIGS. 6A to 6D.

According to an embodiment, the processor 410 may set the plurality of partition regions 550 on the display 420 displaying the plurality of visual objects 520. The processor 410 may identify one region among the plurality of partition regions 550 in which the plurality of prediction points 510 (or the gaze prediction point) determined through the gaze information are located, by using the plurality of partition regions 550.

For example, the plurality of partition regions 550 may control the display 420 to set, on the screen 501, a first partition region 551, a second partition region 552 surrounding the first partition region 551, and a third partition region 553 surrounding the second partition region 552 while the plurality of visual objects 520 are displayed on the screen 501 through the display 420. For example, the processor 410 may set the partition regions 551, 552, and 553 based on an FoV of the user 50. The first partition region 551 may be set based on an FoV (e.g., 20 degrees) within a first reference range of the user 50. The second partition region 552 surrounding the first partition region 551 may be set based on an FoV (e.g., 40 degrees) within a second reference range larger than the first reference range. The third partition region 553 surrounding the second partition region 552 may be set as a remaining region excluding the first partition region 551 and the second partition region 552. However, the above-mentioned embodiments are exemplary and are not limited thereto.

For example, the processor 410 may identify a first set of visual objects 521 located within the first partition region 551 and a first set of gaze input regions 531 formed on the first set of visual objects 521 based on identifying the plurality of prediction points 510 within the first partition region 551. For example, the processor 410 may identify a second set of visual objects 522 located within the second partition region 552 and a second set of gaze input regions 532 formed on the second set of visual objects 522 based on identifying the plurality of prediction points 510 within the second partition region 552.

According to an embodiment, the processor 410 may determine a region in which visual objects 523 and 524 and/or gaze input regions 533 and 534 at least partially overlapping boundaries b1 and b2 between the plurality of partition regions 550 are located. For example, the processor 410 may set a center point on the display 420 of each of the plurality of visual objects 520 as a location of each of the plurality of visual objects 520. Based on a location of the center point, a region in which the plurality of visual objects 520 are located may be determined.

For example, center points of a third set of visual objects 523 at least partially overlapping a boundary b1 of the first partition region 551 and the second partition region 552 may each be located within the second partition region 552. The processor 410 may determine the third set of visual objects 523 and a third set of gaze input regions 533 respectively formed on the third set of visual objects 523 as being located within the second partition region 552 based on the center points of the third set of visual objects 523 located within the second partition region 552. For example, center points of a fourth set of visual objects 524 at least partially overlapping a boundary b2 of the second partition region 552 and the third partition region 553 may each be located within the second partition region 552. The processor 410 may determine the fourth set of visual objects 524 and a fourth set of gaze input regions 534 respectively formed on the fourth set of visual objects 524 as being located within the second partition region 552 based on the center points of the fourth set of visual objects 524 located within the second partition region 552. However, the above-described embodiments are exemplary and are not limited thereto. The processor 410 may perform gaze information calibration by using the plurality of partition regions 550 and the gaze input regions 530 of the plurality of visual objects 520 each located within the plurality of partition regions 550. An operation of the processor 410 for calibrating the gaze information through the plurality of partition regions 550 and the gaze input regions 530 is illustrated and described in FIGS. 6A to 6D.

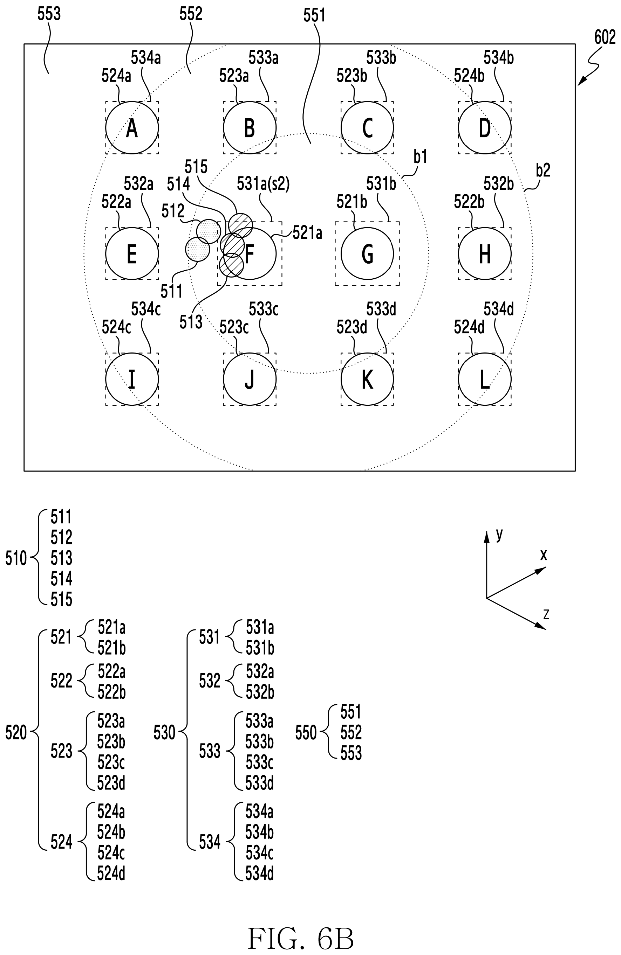

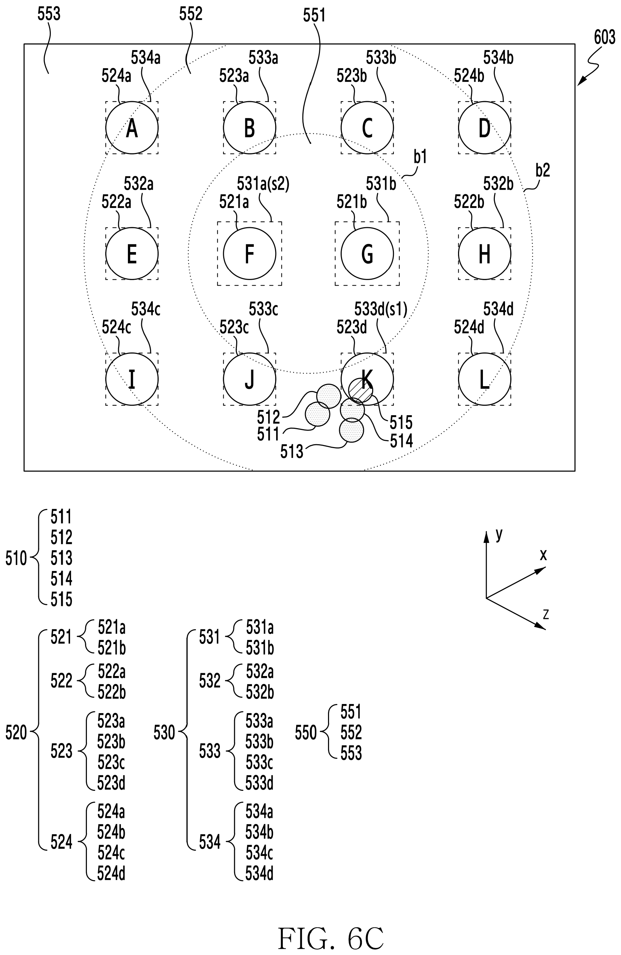

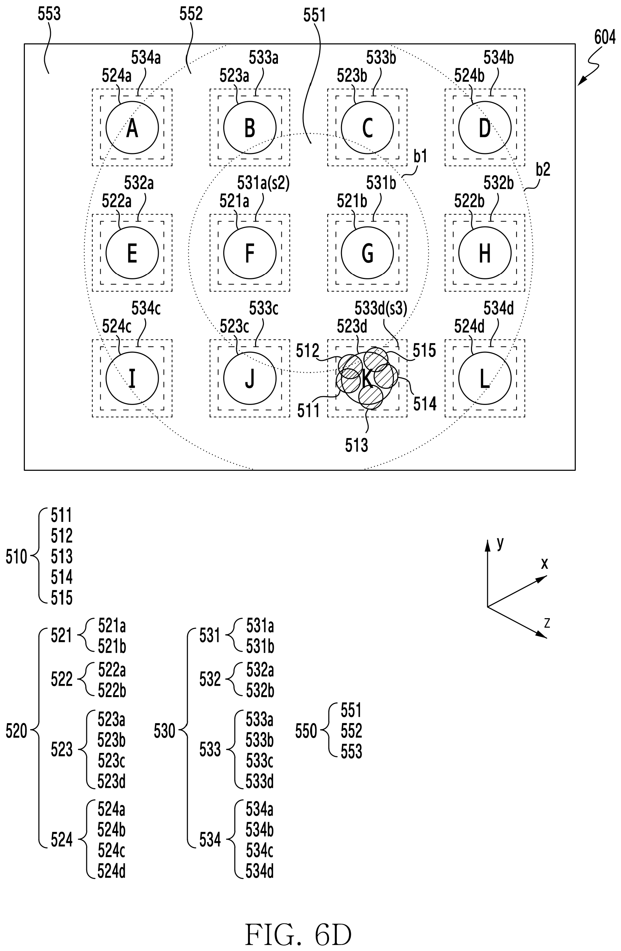

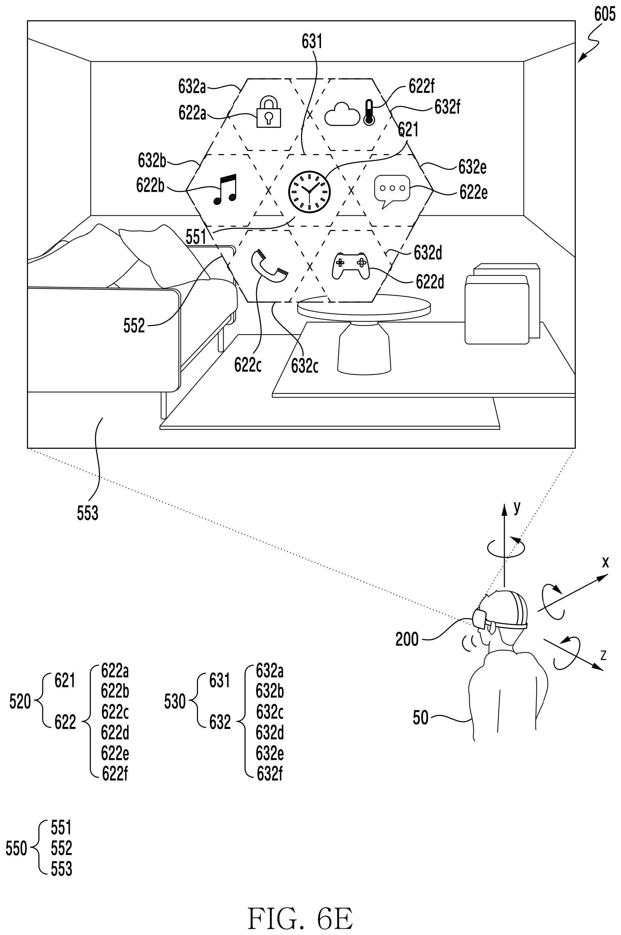

FIGS. 6A, 6B, 6C, 6D, and 6E illustrate an operation of an exemplary wearable device for calibration of gaze information.

Referring to FIGS. 6A, 6B, 6C, and 6D, a processor (e.g., the processor 410 of FIG. 4) may be configured to display a plurality of visual objects 520 on a display (e.g., the display 420 of FIG. 4). The plurality of visual objects 520 may include gaze input regions 530 respectively formed on the plurality of visual objects 520 for providing visual feedback with respect to a gaze of a user (e.g., the user 50 of FIG. 5) facing the plurality of visual objects 520. The processor 410 may be configured to obtain gaze information related to the gaze, determined based on a camera (e.g., the camera 425 of FIG. 4) of the wearable device 200, in a state of displaying the plurality of visual objects 520. The processor 410 may be configured to determine a location on the display 420 of a plurality of prediction points 510 for predicting the gaze of the user and/or a gaze prediction point determined by the plurality of prediction points 510 by using the gaze information. The processor 410 may be configured to set a plurality of partition regions 550 on the display 420 displaying the plurality of visual objects 520.

Hereinafter, redundant descriptions of the configuration and/or the operation described in FIG. 5 will be omitted.

Referring to FIG. 6A, the processor 410 may be configured to identify whether to calibrate the gaze information related to the gaze of the user in a state 601 in which the plurality of visual objects 520 are displayed through the display 420.

For example, the processor 410 may be configured to change the location of the plurality of prediction points 510 based on a first user input for visual feedback from the gaze input regions 530. The processor 410 may be configured to measure a time interval in which the first user input is received based on identifying at least some of the plurality of prediction points 510 located within one gaze input region among the gaze input regions 530. The processor 410 may determine calibration of the gaze information related to the gaze of the user based on the time interval exceeding a preset reference time interval.

For example, the processor 410 may change the location of the plurality of prediction points 510 on the display 420 based on receiving a first user input for visual feedback through a visual object 521a. While the first user input is received, the processor 410 may measure a time interval until an input for visual feedback through the visual object 521a is received. The processor 410 may be configured to determine calibration of the gaze information related to the gaze of the user based on identifying the time interval exceeding the preset reference time interval.

For example, the processor 410 may measure a failure rate of visual feedback through the plurality of prediction points 510 and the gaze input regions 530 with respect to the first user input. The processor 410 may be configured to determine calibration of the gaze information related to the gaze of the user based on the failure rate exceeding a preset reference failure rate.

For example, the processor 410 may include a sensor (e.g., the sensor 430 of FIG. 4) for detecting a location of the wearable device 200. The processor 410 may be configured to detect an angle (e.g., the angle a of FIG. 3B) between a reference axis (e.g., the reference axis x1 of FIG. 3B) of the wearable device 200 and an orientation axis (e.g., the orientation axis x2 of FIG. 3B) of the wearable device 200 through the at least one sensor.

The orientation axis x2 of the wearable device 200 may be an axis representing an orientation (or direction) of the wearable device 200. For example, the orientation axis x2 may rotate along the wearable device 200 by rotation of the wearable device 200. The reference axis x1 of the wearable device 200 may be an axis fixed with respect to the orientation axis x2 of the wearable device 200. For example, the reference axis x1 may be an axis fixed independently with respect to movement and/or rotation of the wearable device 200. The orientation axis x2 of the wearable device 200 may provide information on tilting of the wearable device 200 through at least one sensor by representing an orientation of the wearable device 200 according to rotation of the wearable device 200 through the angle a between the reference axis x1 fixed with respect to the orientation axis x2 and the orientation axis x2.

The processor 410 may be configured to determine calibration of the gaze information related to the gaze of the user in response to identifying that the angle a exceeds a preset reference angle. However, the above-described embodiments are exemplary and are not limited thereto. The processor 410 may be configured to detect degradation of an eye tracking function based on the gaze of the user of the wearable device 200 in various methods other than the above-mentioned embodiments. The processor 410 may be configured to determine calibration of the gaze information related to the gaze of the user based on detecting degradation of the eye tracking function.

According to an embodiment, the processor 410 may be configured to reduce sizes of each of the gaze input regions 530 based on determining calibration of the gaze information. For example, the processor 410 may minimize a size of the plurality of gaze input regions 530 formed on the plurality of visual objects 520 based on determining calibration of the gaze information. According to an embodiment, the processor 410 may be configured to set a padding value of each of the plurality of visual objects 520 for the plurality of gaze input regions 530 to 0 or reset it to a minimum value based on determining calibration of the gaze information.

For example, a state in which the padding value of each of the plurality of visual objects 520 is 0 may be a state in which, as the plurality of visual objects 520 and the plurality of gaze input regions 530 on the plurality of visual objects 520 overlap with each other, no space of a display region between the plurality of visual objects 520 and the plurality of gaze input regions 530 is provided. For example, a state in which the padding value of each of the plurality of visual objects 520 is minimum may be a state in which, among a plurality of sizes of the gaze input regions 530 respectively corresponding to the plurality of visual objects 520 and settable within the wearable device 200, the size of each of the gaze input regions 530 is a size at which a size of a display region between the gaze input regions 530 and the plurality of visual objects 520 becomes a minimum size.

However, the above-described embodiments are exemplary, and the padding value reset for calibration of the gaze information may vary according to the wearable device 200 and/or settings. For example, corresponding to a direction of the gaze of the user, a location and/or direction of a display region having the minimum size between the gaze input regions 530 and the plurality of visual objects 520 may be changed according to a location of the prediction points 510 on the display 420 for predicting the gaze.

According to an embodiment, the size of each of the gaze input regions 530 respectively corresponding to the plurality of visual objects 520 may be differently set according to a head mounted display (HMD), an auxiliary lens, and glasses providing a screen for displaying the plurality of visual objects 520 of the wearable device 200.

When referring sequentially to FIGS. 6A and 6B, the processor 410 may be configured to generate calibration information to be used to calibrate the gaze information by using gaze information detected while providing visual feedback using the reduced sizes of the gaze input regions 530.

For example, the processor 410 may receive a second user input for visual feedback from the gaze input regions 530 while changing from the state 601 to a state 602. Based on the second user input, the processor 410 may change the location of the plurality of prediction points 510 on the display 420. The processor 410 may be configured to obtain calibration information for calibration of the gaze information used to determine the location of the prediction points 510 through the changed location of the plurality of prediction points 510.

For example, the processor 410 may induce an input of the user for visual feedback through the gaze input regions 530 (and/or the plurality of visual objects 520) by reducing the sizes of the gaze input regions 530 based on determining calibration of the gaze information. For example, the processor 410 may be configured to induce an input of the user for an input to the visual object 521a by minimizing the sizes of the gaze input regions 530 based on determining calibration of the gaze information. The processor 410 may induce an input to the visual object 521a by changing the location of the plurality of prediction points 510 based on a second user input for the input to the visual object 521a.

According to an embodiment, the processor 410 may be configured to identify whether an error value corresponding to calibration information to be used to calibrate the gaze information exceeds a specified error value. The processor 410 may be configured to execute a function for calibrating the gaze information through a session for storing the gaze information based on identifying that the error value exceeds the specified error value. The processor 410 may execute a function for calibrating the gaze information by adjusting the sizes of the plurality of gaze input regions 530 based on the error value less than the specified error value. The processor 410 may increase accuracy of calibration with respect to a relatively large error by being configured to calibrate an error value exceeding the specified error value through the session.

According to an embodiment, the processor 410 may be configured to expand the sizes of the gaze input regions 530 by using calibration information to be used to calibrate the gaze information. The processor 410 may be configured to determine a gaze input region of which a size is to be expanded according to a region in which the plurality of prediction points 510 (and/or a gaze prediction point determined by the plurality of prediction points 510) are located.

For example, the processor 410 may be configured to identify one partition region in which the plurality of prediction points 510 on the display 420 are located among the plurality of preset partition regions 550 by using the gaze information. The processor 410 may be configured to identify one or more visual objects located within the one partition region and one or more gaze input regions respectively formed on the one or more visual objects. The processor 410 may be configured to adjust a size of the one or more gaze input regions based on identifying the one or more visual objects within the one partition region.

For example, the processor 410 may identify the plurality of prediction points 510 located within a first partition region 551 among the plurality of partition regions 550 based on determining calibration of the gaze information. The processor 410 may identify a first set of visual objects 521 located within the first partition region 551 based on the plurality of prediction points 510 located within the first partition region 551. The processor 410 may expand sizes of a first set of gaze input regions 531 respectively formed on the first set of visual objects 521 from a size s1 to a size s2 based on identifying the first set of visual objects 521. The processor 410 may induce a user input to the first set of visual objects 521 within the first partition region 551 by expanding the sizes of the first set of gaze input regions 531 within the first partition region 551 based on identifying the plurality of gaze prediction points 510 within the first partition region 551.

For example, when referring sequentially to FIGS. 6B and 6C, the processor 410 may receive a user input for moving the location of the plurality of prediction points 510 based on determining calibration of the gaze information. Based on the user input, the processor 410 may move the location of the plurality of prediction points 510 from the first partition region 551 to a second partition region 552.

For example, when referring sequentially to FIGS. 6C and 6D, the processor 410 may identify the plurality of prediction points 510 located within the second partition region 552 among the plurality of partition regions 550 while performing calibration of the gaze information. For example, while changing from a state 603 to a state 604, the processor 410 may identify a second set of visual objects 522, a third set of visual objects 523, and a fourth set of visual objects 524 located within the second partition region 552 based on the plurality of prediction points 510 located within the second partition region 552. The processor 410 may expand sizes of a second set of gaze input regions 532 respectively formed on the second set of visual objects 522, a third set of gaze input regions 533 respectively formed on the third set of visual objects 523, and a fourth set of gaze input regions 534 respectively formed on the fourth set of visual objects 524 from the first size s1 to a third size s3. The processor 410 may induce a user input to the visual objects 521, 522, and 523 within the second partition region 552 by expanding the sizes of the gaze input regions 531, 532, and 533 within the second partition region 552 based on identifying the plurality of gaze prediction points 510 within the second partition region 552. However, the above-mentioned embodiments are exemplary and are not limited thereto.

For example, the processor 410 may be configured to obtain calibration information for calibration of the gaze information by using location information of the plurality of prediction points 510 changed while changing from the state 601 to the state 602 and location information of the plurality of prediction points 510 changed while changing from the state 603 to the state 604. For example, while changing from the state 601 to the state 602, the processor 410 may generate calibration information by using location information of the plurality of prediction points 510 changed for an input to the visual object 521a. The processor 410 may update the calibration information by using location information of the plurality of prediction points 510 changed for an input to a visual object 523d while changing from the state 603 to the state 604. However, it is not limited thereto.

According to an embodiment, the processor 410 may identify one partition region among the plurality of partition regions 550 in which the plurality of prediction points 510 are located. The processor 410 may be configured to identify whether calibration of the gaze information has been performed within the identified one partition region based on determining calibration of the gaze information. The processor 410 may reduce a size of each of one or more gaze input regions respectively formed on one or more visual objects displayed within the one partition region among the plurality of visual objects 520 based on identifying that calibration of the gaze information has not been performed within the one partition region. The processor 410 may obtain calibration information by using the gaze information based on identifying that calibration of the gaze information has been performed within the one partition region.

For example, referring to FIG. 6A, the processor 410 may identify whether calibration has been performed within the first partition region 551 based on identifying the first partition region 551 in which the plurality of prediction points 510 are located. The processor 410 may reduce the sizes of the first set of gaze input regions 531 within the first partition region 551 based on identifying that calibration has not been performed within the first partition region 551.

For example, when referring to FIGS. 6B and 6C, the processor 410 may be configured to maintain the sizes of the gaze input regions 530 adjusted based on performing the calibration while the calibration is performed. For example, in FIG. 6C, the sizes of the first set of gaze input regions 531 within the first partition region 551 in which calibration has been performed may be maintained at the second size s2. Although not illustrated, in a case that the plurality of prediction points 510 are again located within the first partition region 551 from the state 604 of FIG. 6D, while calibration is performed, the processor 410 may be configured to adjust the sizes of the gaze input regions 531 based on the second size s2.

According to an embodiment, the processor 410 may be configured to identify whether the calibration information converges to an error value to be used to calibrate the gaze information by comparing the calibration information with previously obtained calibration information based on identifying that calibration of the gaze information has been performed within one partition region among the plurality of partition regions 550. The processor 410 may be configured to calibrate the gaze information by using the error value based on the calibration information converging to the error value.

For example, the processor 410 may receive a plurality of user inputs corresponding to a plurality of attempts for an input to a visual object 532a based on location information of the plurality of prediction points 510 while changing from the state 601 to the state 602. The processor 410 may identify whether the error value converges by comparing error values obtained based on the plurality of user inputs. While identifying the error value that does not converge, the processor 410 may execute a function for calibration of the gaze information. The processor 410 may determine the error value as calibration information for calibration of the gaze information based on identifying the error value that converges. However, it is not limited thereto. For example, in a case that the error value obtained while changing from the state 601 to the state 602 does not converge, the processor 410 may identify whether an error value obtained while changing from the state 603 to the state 604, including the error value obtained while changing from the state 601 to the state 602, converges. The processor 410 may determine the error value as calibration information for calibration of the gaze information based on identifying the error value that converges.

Referring to FIG. 6E, unlike the screens 601, 602, 603, and 604 illustrated in FIGS. 6A to 6D, a plurality of visual objects 520 having various shapes and gaze input regions 530 respectively corresponding to the plurality of visual objects 520 may be displayed through a screen 605 of the display 420. The processor 410 may be configured to set a plurality of partition regions 550 of various forms for adjusting a size of each of the gaze input regions 530. For example, as illustrated, gaze adjustment regions respectively corresponding to the plurality of visual objects 520 may have a polygonal shape, but are not limited thereto. For example, the processor 410 may be configured to display a visual object 621 displayed within a first partition region 551 and a gaze input region 631 formed on the visual object 621. The processor 410 may include a fifth set of visual objects 622 displayed to surround the visual object 621 and displayed within a second partition region 552, and a fifth set of gaze input regions 632 formed on each of the fifth set of visual objects 622. Each of visual objects 622a, 622b, 622c, 622d, 622e, and 622f included in the fifth set of visual objects 622 may include gaze input regions 632a, 632b, 632c, 632d, 632e, and 632f formed on each of the visual objects 622a, 622b, 622c, 622d, 622e, and 622f. However, the above-mentioned embodiment is exemplary and is not limited thereto.

According to the above-described embodiment, the processor 410 of the wearable device 200 may perform an operation for calibrating the gaze information related to the gaze of the user by adjusting the sizes of the gaze input regions 530 formed on the plurality of visual objects 520 and the plurality of partition regions 550. The processor 410 may provide an enhanced user experience through eye tracking by performing the operation for calibrating the gaze information.

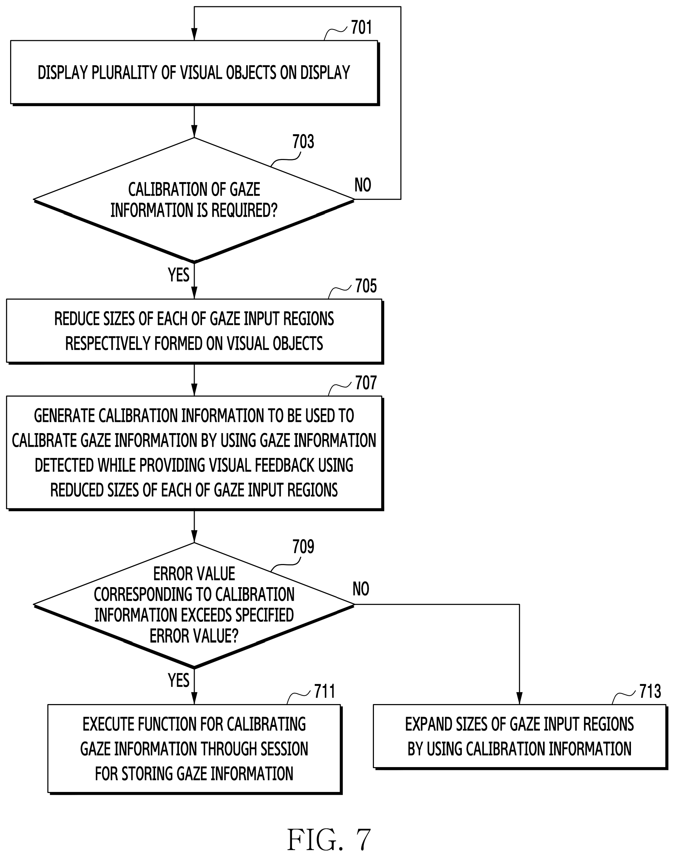

FIG. 7 is a flow chart illustrating an operation of an exemplary wearable device for calibration of gaze information.

Operations of FIG. 7 may be executed by the electronic device 101 and/or the processor 120 of FIG. 1, the wearable device 200 of FIG. 2A, the wearable device 200 of FIG. 3A, and the wearable device 200 and/or the processor 410 of FIG. 4.

Referring to FIG. 7, in operation 701, the processor 410 may be configured to display a plurality of visual objects (e.g., the plurality of visual objects 520 of FIG. 5) on a display (e.g., the display 420 of FIG. 4). For example, the processor 410 may control the display 420 to display the plurality of visual objects 520 including gaze input regions (e.g., the gaze input regions 530 of FIG. 5) for providing visual feedback with respect to a gaze of a user, on the display 420.

In operation 703, the processor 410 may identify whether calibration of gaze information is required. For example, the processor 410 may determine calibration of the gaze information based on detecting degradation of a gaze tracking function of the wearable device 200. For example, the processor 410 may determine calibration of the gaze information based on a time interval in which a user input for visual feedback by the plurality of visual objects 520 is performed and/or a failure rate of the visual feedback with respect to the user input. For example, the processor 410 may determine calibration of the gaze information based on an angle a between a reference axis (e.g., the reference axis x1 of FIG. 3B) and an orientation axis (e.g., the orientation axis x2 of FIG. 3B) of the wearable device 200, detected through a sensor (e.g., the sensor 430 of FIG. 4). In a case that the processor 410 does not detect degradation of the gaze tracking function of the wearable device 200 (e.g., 703-NO), it may perform operation 701. For example, the processor 410 may be configured to obtain voice information from the user through the sensor 430. The processor 410 may be configured to obtain or analyze natural language (e.g., a natural language sentence such as "Why is the selection not working well?") uttered by the user, using the voice information obtained through the sensor 430. The processor 410 may be configured to determine calibration of the gaze information based on the voice information obtained from the user. For example, the wearable device 200 may be linked with a controller operable by a user wearing the wearable device 200. For example, the controller may be used for a user input to the plurality of visual objects 520 displayed on the display 420 of the wearable device 200 by being connected to the wearable device 200 through communication circuitry (e.g., the communication circuitry 435 of FIG. 4) of the wearable device 200. For example, unlike the wearable device 200 worn on a head of the user, the controller may be provided in a hand held form to be operable by a hand of the user. Separately from the gaze tracking function of the wearable device 200, the controller may provide a tracking function for a user input to the plurality of visual objects 520 displayed on the display 420 of the wearable device 200 based on a motion of the hand of the user operating the controller. For example, the controller may cause the processor 410 of the wearable device 200 to display, on the display 420, a pointer for a user input to the plurality of visual objects 520 displayed on the display 420 of the wearable device 200, by being connected to the wearable device 200. The processor 410 may be configured to determine calibration of the gaze information by comparing information obtained from the controller and/or the pointer provided by the controller with gaze information obtained through the wearable device 200 (e.g., through a camera 425 or the sensor 430 of the wearable device 200).

In operation 705, the processor 410 may reduce sizes of each of the gaze input regions respectively formed on the plurality of visual objects 520 based on determining calibration of the gaze information. For example, the processor 410 may minimize a padding value of the plurality of visual objects 520 within a plurality of partition regions (e.g., the plurality of partition regions 550 of FIG. 5) on the display 420 based on identifying that calibration has not been performed within the plurality of partition regions 550.

In operation 707, the processor 410 may generate calibration information to be used to calibrate the gaze information by using gaze information detected while providing visual feedback using the reduced sizes of each of the gaze input regions 530. For example, while calibration is performed, the processor 410 may detect gaze information through a plurality of prediction points (e.g., the plurality of prediction points 510 of FIG. 5) whose locations are changed through a user input. The processor 410 may generate calibration information for calibration of the gaze information by using location information of the changed plurality of prediction points 510.

In operation 707, the processor 711 may identify whether an error value corresponding to the obtained calibration information exceeds a specified error value. In a case that the processor 711 does not identify the error value exceeding the specified error value (e.g., 709-NO), it may perform operation 713.

In operation 709, the processor 410 may be configured to execute a function for calibrating the gaze information through a session for storing the gaze information, based on identifying the error value corresponding to the calibration information exceeding the specified error value. The processor 410 may improve accuracy of calibration with respect to a relatively large error by being configured to calibrate the error value exceeding the specified error value through the session.

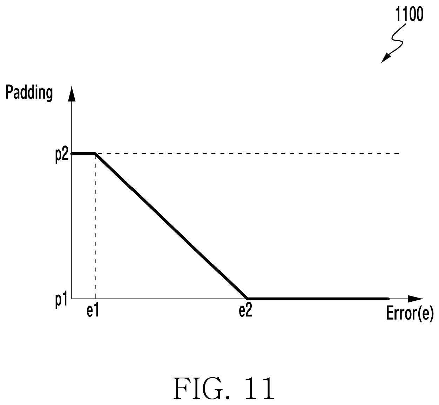

In operation 713, the processor 410 may expand the size of the gaze input regions 530 by using the calibration information. For example, the processor 410 may adjust the padding value of each of the plurality of visual objects 520 by using the obtained calibration information. For example, the processor 410 may be configured to adjust the sizes of the gaze input regions 530 from the error value corresponding to the calibration information based on a preset function (e.g., a function illustrated in a graph 1100 of FIG. 11).

According to the above-described embodiment, the processor 410 of the wearable device 200 may perform an operation for calibrating gaze information related to a gaze of the user by adjusting the sizes of the gaze input regions 530 formed on the plurality of visual objects 520. The processor 410 may provide an enhanced user experience through gaze tracking by performing the operation for calibrating the gaze information.

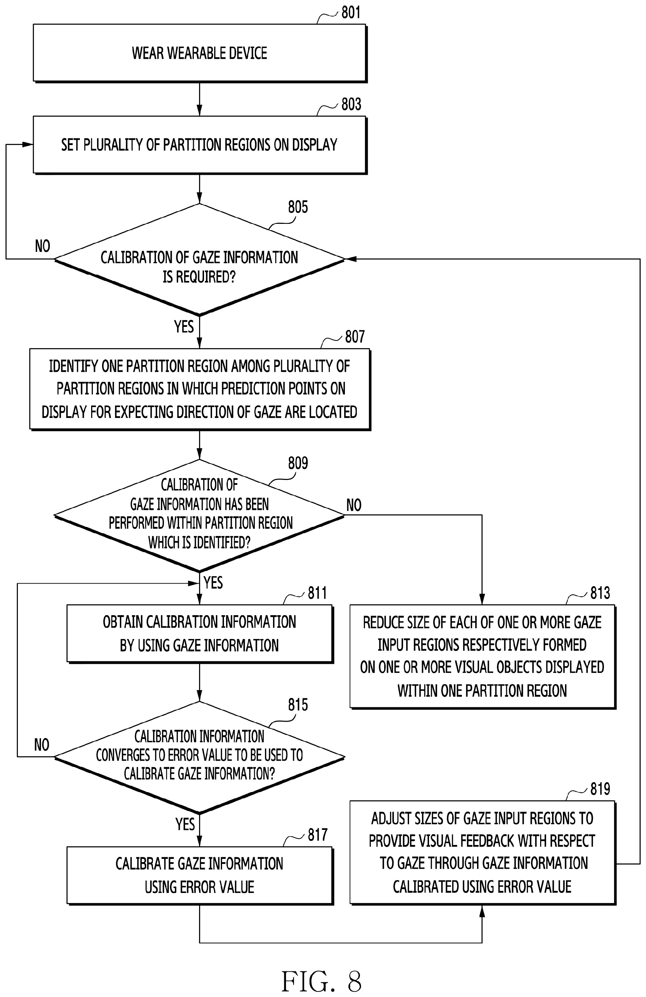

FIG. 8 is a flow chart illustrating an operation of an exemplary wearable device for calibration of gaze information.

Operations of FIG. 8 may be executed by the electronic device 101 and/or the processor 120 of FIG. 1, the wearable device 200 of FIG. 2A, the wearable device 200 of FIG. 3A, and the wearable device 200 and/or the processor 410 of FIG. 4. Operation 805 of FIG. 8 may be an operation corresponding to operation 703 of FIG. 7.

In operation 801, the processor 410 may be configured to detect that the wearable device 200 is worn on a part of a body (e.g., a head) of a user. For example, the processor 410 may be configured to obtain information related to a location of the wearable device 200 by using a sensor (e.g., the sensor 430 of FIG. 4) in a state in which the wearable device 200 is worn by the user.

In operation 803, the processor 410 may set a plurality of partition regions (e.g., the plurality of partition regions 550 of FIG. 5) on a display (e.g., the display 420 of FIG. 4) on which a plurality of visual objects (e.g., the plurality of visual objects 520 of FIG. 5) are displayed. For example, the processor 410 may set the plurality of partition regions 550 based on an FoV of the user wearing the wearable device 200, but is not limited thereto.

In operation 805, the processor 410 may identify whether calibration of gaze information is required. In a case that the processor 410 does not detect degradation of a gaze tracking function of the wearable device 200 for calibration of the gaze information (e.g., 803-NO), it may perform operation 801.

In operation 807, the processor 410 may identify one partition region among the plurality of partition regions 550 in which prediction points (e.g., the plurality of prediction points 510 of FIG. 5) on the display 420 for expecting a direction of a gaze are located. For example, the processor 410 may identify one partition region in which the plurality of prediction points 510 are located, based on location information of the plurality of prediction points 510 on the display 420.

In operation 809, the processor 410 may identify whether calibration of the gaze information has been performed within the one partition region which is identified. In a case that the processor 410 does not identify that calibration of the gaze information has been performed within the one partition region (e.g., 809-NO), it may perform operation 811.

In operation 811, the processor 410 may obtain calibration information by using the gaze information based on identifying that calibration of the gaze information has been performed within the one partition region which is identified. For example, the processor 410 may identify that a function for calibration of the gaze information is being executed, based on identifying that calibration of the gaze information has been performed within the one partition region which is identified. The processor 410 may obtain calibration information by using location information of the plurality of prediction points 510 within the one partition region which is identified, based on identifying execution of the function.

In operation 813, the processor 410 may reduce a size of each of one or more gaze input regions respectively formed on one or more visual objects displayed within the one partition region which is identified. For example, when referring together with FIG. 6A, the processor 410 may reduce a size of a first set of gaze input regions 531 respectively formed on a first set of visual objects 521 within a first partition region 551, based on the first partition region 551 in which calibration has not been performed.

In operation 815, the processor 410 may identify whether the obtained calibration information converges to an error value to be used to calibrate the gaze information. In a case that the processor 410 does not identify the calibration information converging to the error value (e.g., 815-NO), it may update calibration information for calibration of the gaze information by performing operation 809.

In operation 817, the processor 410 may calibrate the gaze information using the error value based on identifying calibration information converging to the error value to be used to use the gaze information. For example, the processor 410 may apply the converged error value to the gaze information, based on identifying calibration information having the converged error value. As the gaze information is calibrated through the error value, the wearable device 200 may provide an enhanced user experience through gaze tracking.

In operation 819, the processor 410 may be configured to adjust sizes of gaze input regions 530 to provide visual feedback through the gaze information calibrated using the converged error value. For example, the processor 410 may be configured to determine the error value as calibration information for calibrating the gaze information, based on identifying the converged error value. The processor 410 may be configured to adjust the sizes of the gaze input regions 530 through one or more preset functions (e.g., a function of FIG. 11) in the wearable device 200, by using the determined calibration information. The processor 410 may be configured to perform operation 805 while visual feedback is provided, after adjusting the size of the gaze input regions 530.

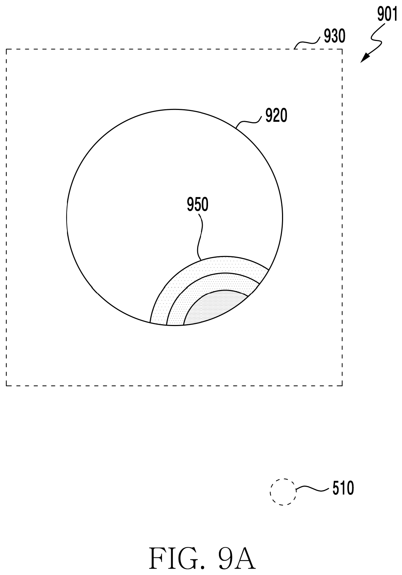

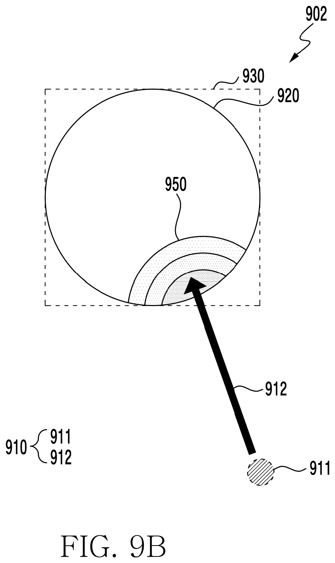

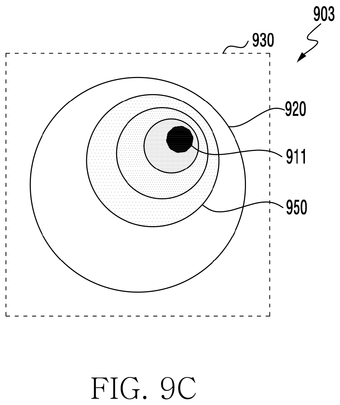

FIGS. 9A, 9B, and 9C illustrate an operation of an exemplary wearable device for providing visual feedback.

Referring to FIGS. 9A, 9B, and 9C, states 901, 902, and 903 of a visual object 920 displayed through a display (e.g., the display 420 of FIG. 4) are illustrated. Operations described through FIGS. 9A, 9B, and 9C may be executed by the electronic device 101 and/or the processor 120 of FIG. 1, the wearable device 200 of FIG. 2A, the wearable device 200 of FIG. 3A, and the wearable device 200 and/or the processor 410 of FIG. 4.

Referring to FIG. 9A, in the state 901, the processor 410 may include the visual object 920 including a gaze input region 930 for providing visual feedback. In the state 901, the processor 410 may determine a location of a plurality of prediction points 510 for expecting a direction of a gaze, based on gaze information related to the gaze of a user. For example, the processor 410 may be configured to change a color and/or a size of visual objects close to the prediction points 510 for predicting a gaze of the user among a plurality of visual objects 520. For example, the processor 410 may be configured to detect a movement and/or motion of the user through a sensor 430 while providing visual feedback through the display 420. The processor 410 may be configured to determine one visual object among the visual objects close to the prediction points 510 by using a direction and/or a location corresponding to the motion, based on detecting the motion of the user.

Referring to FIGS. 9A and 9B, the processor 410 may determine calibration of the gaze information while changing from the state 901 to the state 902. The processor 410 may reduce a size of the gaze input region 930 based on determining calibration of the gaze information.

According to an embodiment, the processor 410 may be configured to display one or more guide objects 910 corresponding to a gaze of the user predicted based on a camera (e.g., the camera 425 of FIG. 4) on the display 420, based on the reduced size of the gaze input region 930. For example, the processor 410 may be configured to display a first guide object 911 at a location of the plurality of prediction points 510 for expecting a direction of a gaze of the user, in response to the reduced gaze input region 930. The processor 410 may guide and/or induce a change in the direction of the gaze of the user for an input through the visual object 920 by displaying the first guide object 911 on the display 420.

For example, the processor 410 may be configured to display, on the display 420, a second visual object 912 around the first guide object 911 to guide a movement direction for the input to the visual object 920, in response to the reduced gaze input region 930. The processor 410 may guide and/or induce a change in the direction of the gaze of the user for the input through the visual object 920 by displaying the second guide object 912 on the display 420.

According to an embodiment, the processor 410 may be configured to determine a location of the one or more guide objects 910 using a location of the plurality of prediction points on the display 420. For example, a location of the first guide object 911 may be determined as an average value of locations of the plurality of prediction points 510 on the display 420. For example, a location of the second guide object 912 may be determined based on the location of the first guide object 911.

According to an embodiment, the processor 410 may be configured to display, as visual feedback, a graphic region 950 guiding the location of the prediction points 510 on the visual object 920 based on the prediction points 510. For example, the processor 410 may be configured to display, on the visual object 920, at least a portion of the graphic region 950 configured to provide a gradation effect based on the prediction points 510 for predicting a gaze of the user. The graphic region 950 may guide movement of the gaze of the user to the visual object 920 by being displayed on the visual object 920. The graphic region 950 may be referred to as the one or more guide objects 910 in terms of inducing the prediction points 510 for predicting the gaze of the user to move toward the visual object 920.

Referring to FIGS. 9B and 9C, the processor 410 may generate calibration information for calibrating the gaze information by using a change in location information of the first guide object 911 for predicting a gaze of the user while changing from the state 902 to the state 903. The processor 410 may expand the gaze input region 930 by using the calibration information. For example, the location of the first guide object 911 for predicting a gaze may be changed by a user input guided by the one or more guide objects 910. Based on the changed location information of the first guide object 911, the processor 410 may generate calibration information for calibration of the gaze information. As the processor 410 expands the size of the gaze input region 930 by using the calibration information, the first guide object 911 may be located within the gaze input region 930. The processor 410 may receive a user input to the visual object 920 based on the first guide object 911 located within the gaze input region 930. The processor 410 may be configured to display a screen related to the visual object 920 through the display 420 based on receiving the user input to the visual object 920.

For example, the prediction points 510 may be located on the visual object 920. The graphic region 950 for guiding the location of the prediction points 510 may be entirely displayed within the visual object 920. The graphic region 950 may be configured to guide the location of the prediction points 510 for predicting a gaze of the user within the visual object 920.

According to the above-described embodiment, the processor 410 of the wearable device 200 may provide an enhanced user experience through gaze tracking by providing the one or more visual objects 920 for guiding the location of the gaze of the user while calibration of the gaze information is performed.

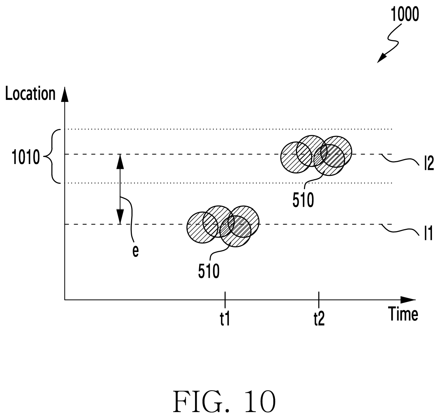

FIG. 10 is a graph illustrating a location of a plurality of prediction points of a gaze of a user on a display of an exemplary wearable device over time.

Referring to FIG. 10, a horizontal axis of a graph 1000 represents time. A vertical axis of the graph 1000 represents a location of objects displayed on a display (e.g., the display 420 of FIG. 4).

Referring to the graph 1000, a location of a plurality of prediction points 510 for predicting a gaze of a user on the display 420 may be changed according to movement of the gaze of the user and/or movement of a camera (e.g., the camera 425 of FIG. 4). For example, the location of the plurality of prediction points 510 may correspond to an average value of locations of each of the plurality of prediction points 510. For example, while changing from a timing t1 to a timing t2, the location of the plurality of prediction points 510 may be changed from a first location l1 to a second location l2. The processor 410 may generate an error value e corresponding to calibration information during a time interval between the timing t1 and the timing t2 by using the first location l1 and the second location l2. The processor 410 may be configured to adjust a size of a gaze input region 1010 of a visual object (e.g., the visual object 920 of FIG. 9A) displayed on the display 420 by using the error value e. A description of adjustment of the gaze input region 1010 using the error value e will be described below in FIG. 11.

FIG. 11 is a graph illustrating a relationship between an error value corresponding to calibration information of an exemplary wearable device and a padding value of gaze input regions.

Referring to FIG. 11, a horizontal axis of a graph 1100 represents an error value e corresponding to calibration information for calibration of gaze information. A vertical axis of the graph 1100 represents a padding value of a visual object (e.g., the visual object 920 of FIG. 9A) displayed on a display (e.g., the display 420 of FIG. 4).

Referring to the graph 1100, the processor 410 of the wearable device 200 may be configured to adjust a padding value of a visual object by using an obtained error value based on a preset function. For example, the processor 410 may set the padding value of the visual object to a second padding value p2 by using a function illustrated in the graph 1100 through a first error value e1 corresponding to obtained calibration information. For example, the processor 410 may set the padding value of the visual object to a first padding value p1 smaller than the second padding value p2 by using the function illustrated in the graph 1100 through a second error value e2 greater than the first error value e1. The processor 410 may adjust a size of a gaze input region of the visual object (e.g., the gaze input region 930 of FIG. 9A) by adjusting the padding value of the visual object using the function.

According to the above-described embodiment, the processor 410 of the wearable device 200 may perform an operation for calibrating gaze information related to a gaze of a user by adjusting sizes of a gaze input region of a visual object. The processor 410 may provide an enhanced user experience through gaze tracking by performing the operation for calibrating the gaze information.

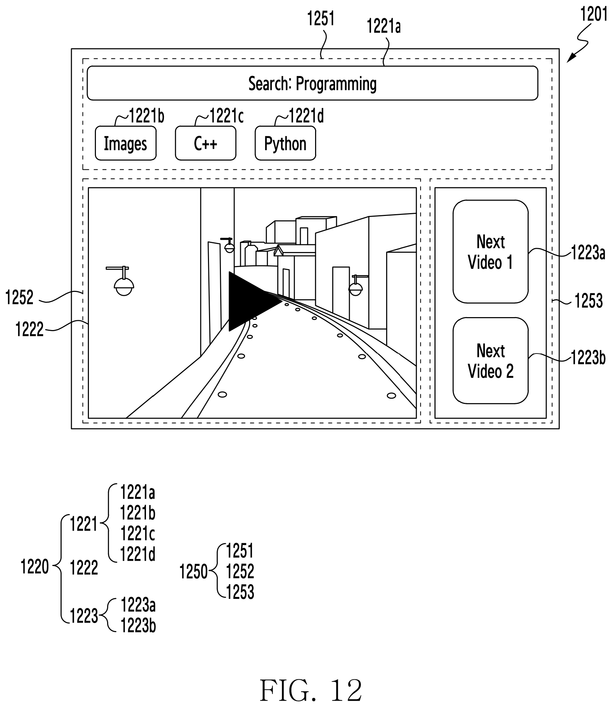

FIG. 12 illustrates a portion of a screen displayed through a display of an exemplary wearable device.

Referring to FIG. 12, an exemplary screen 1201 provided through a display (e.g., the display 420 of FIG. 4) of a wearable device (e.g., the wearable device 200 of FIG. 2A) is illustrated. Referring to FIG. 12, a processor (e.g., the processor 410 of FIG. 4) may be configured to display a plurality of visual objects 1220 and gaze input regions (e.g., the gaze input regions 530 of FIG. 5) respectively formed on the plurality of visual objects 1220. For example, the processor 410 may be configured to set a partition region 1251 for selecting visual objects 1221a, 1221b, 1221c, and 1221d, a partition region 1252 for selecting a visual object 1222 for video playback, and a partition region 1253 for visual objects 1223a and 1223b for playback of a video different from the video. The processor 410 may be configured to adjust a size of one or more gaze input regions on one or more visual objects displayed within any one partition region among the partition regions 1251, 1252, and 1253, based on determining calibration of gaze information related to a gaze of a user. However, the above-mentioned embodiment is exemplary, and the processor 410 may be configured to perform calibration to provide visual feedback from visual objects, having various interfaces, displayed within a screen displayed on the display 420, or adjust a size of gaze input regions formed on the visual objects.

According to the above-described embodiment, a wearable device (e.g., the wearable device 200 of FIG. 2A) may comprise a display system (e.g., the display module 160 of FIG. 1) including a first display (e.g., the first display 250-1 of FIG. 3A and the display 420 of FIG. 4) and a second display (e.g., the second display 250-2 of FIG. 3A and the display 420 of FIG. 4), and a camera system (e.g., the camera module 180 of FIG. 1 and the camera 425 of FIG. 4) including a plurality of cameras (e.g., the cameras 260 of FIG. 2B). The camera system may be configured to capture images of eyes of a user while the wearable device is worn on the user. The wearable device may comprise at least one processor (e.g., the processor 120 of FIG. 1 and the processor 410 of FIG. 4) comprising processing circuitry, and memory (e.g., the memory 130 of FIG. 1 and the memory 415 of FIG. 4) comprising one or more storage mediums storing instructions. The instructions, when executed by the at least one processor individually or collectively, may cause the wearable device to display a visual object (e.g., the visual object 521a of FIG. 5) through the display system. The visual object may be associated with a gaze input region (e.g., the gaze input region 531a of FIG. 5) having a first size. The instructions, when executed by the at least one processor individually or collectively, may cause the wearable device to, in a case that identified gaze information falls within the gaze input region, provide visual feedback with respect to the visual object. The instructions, when executed by the at least one processor individually or collectively, may cause the wearable device to, in a case that calibration related to the gaze information is to be performed in a state of displaying the visual object, reduce a size of the gaze input region associated with the visual object from the first size to a second size, generate calibration information based on the gaze information of the user staring at the visual object while the size of the gaze input region is reduced, and after the calibration information is generated, increase the size of the gaze input region associated with the visual object from the second size.

For example, the instructions, when executed by the at least one processor individually or collectively, may cause the wearable device to identify whether an error value corresponding to the calibration information exceeds a specified error value. The instructions, when executed by the at least one processor individually or collectively, may cause the wearable device to execute a function for calibrating the gaze information through a session for storing the gaze information, based on identifying the error value exceeding the specified error value.

For example, the instructions, when executed by the at least one processor individually or collectively, may cause the wearable device to display, through the display system, a plurality of visual objects (e.g., the plurality of visual objects 520 of FIG. 5) including the visual object on the first display and the second display. The instructions, when executed by the at least one processor individually or collectively, may cause the wearable device to set a plurality of partition regions (e.g., the plurality of partition regions 550 of FIG. 5) on the first display and the second display displaying the plurality of visual objects. The instructions, when executed by the at least one processor individually or collectively, may cause the wearable device to identify one partition region (e.g., the first partition region 551 of FIG. 5) among the plurality of partition regions in which a plurality of prediction points (e.g., the plurality of prediction points 510 of FIG. 5) on the first display and the second display for expecting a direction of a gaze of the user are located by using the gaze information. The instructions, when executed by the at least one processor individually or collectively, may cause the wearable device to, in a case that calibration related to the gaze information is to be performed, identify whether calibration of the gaze information has been performed within the one partition region which is identified, and reduce the size of the gaze input region associated with the visual object displayed in the one partition region among the plurality of visual objects from the first size to the second size based on identifying that calibration of the gaze information has not been performed within the one partition region.

For example, the instructions, when executed by the at least one processor individually or collectively, may cause the wearable device to obtain the calibration information by using the gaze information based on identifying that calibration of the gaze information has been performed within the one partition region. The instructions, when executed by the at least one processor individually or collectively, may cause the wearable device to identify whether the calibration information converges to an error value to be used to calibrate the gaze information by comparing the calibration information with previously obtained calibration information. The instructions, when executed by the at least one processor individually or collectively, may cause the wearable device to calibrate the gaze information using the error value based on the calibration information converging to the error value.

For example, the instructions, when executed by the at least one processor individually or collectively, may cause the wearable device to increase the size of the gaze input region having the second size by the previously obtained calibration information to a third size by using the error value which is converged through a specified function which is configured to determine the size of the input region according to the error value.

For example, the instructions, when executed by the at least one processor individually or collectively, may cause the wearable device to receive a first user input for the visual feedback from the gaze input region. The instructions, when executed by the at least one processor individually or collectively, may cause the wearable device to change a location of a plurality of prediction points on the first display and the second display for expecting a direction of a gaze of the user based on the first user input. The instructions, when executed by the at least one processor individually or collectively, may cause the wearable device to measure a time interval in which the first user input is received based on identifying at least some of the plurality of prediction points located in the gaze input region. The instructions, when executed by the at least one processor individually or collectively, may cause the wearable device to determine calibration of the gaze information related to the gaze based on the time interval exceeding a preset reference time interval.

For example, the wearable device may further comprise at least one sensor. The instructions, when executed by the at least one processor individually or collectively, may cause the wearable device to detect an angle (e.g., the angle a of FIG. 3B) between an axis representing an orientation of the wearable device (e.g., the orientation axis x2 of FIG. 3B) and a reference axis (e.g., the reference axis x1 of FIG. 3B) through the at least one sensor. The instructions, when executed by the at least one processor individually or collectively, may cause the wearable device to determine calibration of the gaze information related to the gaze based on identifying that the angle exceeds a preset reference angle.

For example, the instructions, when executed by the at least one processor individually or collectively, may cause the wearable device to, while performing the calibration related to the gaze information, receive a second user input for the visual feedback from the gaze input region, change a location of a plurality of prediction points on the first display and the second display for expecting a direction of a gaze of the user based on the second user input, increase the size of the gaze input region by using the calibration information obtained through the location of the plurality of prediction points which is changed, and provide the visual feedback based on identifying at least some of the plurality of prediction points located in the gaze input region having the size which is increased.

For example, the instructions, when executed by the at least one processor individually or collectively, may cause the wearable device to display, on the first display and the second display, one or more guide objects (e.g., the one or more guide objects 910 of FIG. 9B) corresponding to a gaze of the user predicted based on the plurality of cameras, based on the size of the gaze input region which is reduced from the first size to the second size.

For example, the instructions, when executed by the at least one processor individually or collectively, may cause the wearable device to determine a location of the one or more guide objects using a location of a plurality of prediction points on the first display and the second display for expecting a direction of a gaze of the user.

According to an embodiment, a wearable device (e.g., the electronic device 101 of FIG. 1 and the wearable device 200 of FIG. 2A) may comprise a display (e.g., the display 420 of FIG. 4), one or more cameras (e.g., the camera 425 of FIG. 4) configured to track eyes of a user wearing the wearable device, at least one processor (e.g., the processor 410 of FIG. 4) comprising processing circuitry, and memory (e.g., the memory 415 of FIG. 4) comprising one or more storage mediums storing instructions. The instructions, when executed by the at least one processor individually or collectively, may cause the wearable device to display a plurality of visual objects (e.g., the plurality of visual objects 520 of FIG. 5) on the display. The plurality of visual objects may include gaze input regions (e.g., the gaze input regions 530) respectively formed on the plurality of visual objects for providing visual feedback with respect to a gaze of the user which is facing the plurality of visual objects. The instructions, when executed by the at least one processor individually or collectively, may cause the wearable device to, in a state of displaying the plurality of visual objects, identify whether to calibrate gaze information related to the gaze determined based on the one or more cameras. The instructions, when executed by the at least one processor individually or collectively, may cause the wearable device to reduce sizes of each of the gaze input regions formed on the visual objects respectively based on determining to calibrate the gaze information. The instructions, when executed by the at least one processor individually or collectively, may cause the wearable device to generate calibration information to be used to calibrate the gaze information using the gaze information detected while providing the visual feedback using the sizes which are reduced. The instructions, when executed by the at least one processor individually or collectively, may cause the wearable device to expand the sizes of the gaze input regions by using the calibration information.

For example, the instructions, when executed by the at least one processor individually or collectively, may cause the wearable device to identify whether an error value corresponding to the calibration information exceeds a specified error value. The instructions, when executed by the at least one processor individually or collectively, may cause the wearable device to execute a function for calibrating the gaze information through a session for storing the gaze information based on identifying the error value exceeding the specified error value.

For example, the instructions, when executed by the at least one processor individually or collectively, may cause the wearable device to set a plurality of partition regions (e.g., the plurality of partition regions 550 of FIG. 5) on the display displaying the plurality of visual objects. The instructions, when executed by the at least one processor individually or collectively, may cause the wearable device to identify one partition region among the plurality of partition regions in which a plurality of prediction points on the display for expecting a direction of the gaze are located by using the gaze information. The instructions, when executed by the at least one processor individually or collectively, may cause the wearable device to, based on determining calibration of the gaze information, identify whether calibration of the gaze information has been performed within the one partition region which is identified. The instructions, when executed by the at least one processor individually or collectively, may cause the wearable device to reduce a size of each of one or more gaze input regions respectively formed on one or more visual objects displayed in the one partition region among the plurality of visual objects based on identifying that calibration of the gaze information has not been performed within the one partition region.

For example, the instructions, when executed by the at least one processor individually or collectively, may cause the wearable device to obtain the calibration information by using the gaze information based on identifying that calibration of the gaze information has been performed within the one partition region. The instructions, when executed by the at least one processor individually or collectively, may cause the wearable device to identify whether the calibration information converges to an error value to be used to calibrate the gaze information by comparing the calibration information with previously obtained calibration information. The instructions, when executed by the at least one processor individually or collectively, may cause the wearable device to calibrate the gaze information using the error value based on the calibration information converging to the error value.

For example, the instructions, when executed by the at least one processor individually or collectively, may cause the wearable device to change the size of each of the one or more gaze input regions having a first size by the previously obtained calibration information to a second size (e.g., the second size s2 of FIG. 6B) different from the first size (e.g., the first size s1 of FIG. 6A) by using the error value which is converged.

For example, the instructions, when executed by the at least one processor individually or collectively, may cause the wearable device to receive a first user input for the visual feedback from the gaze input regions. The instructions, when executed by the at least one processor individually or collectively, may cause the wearable device to change a location of a plurality of prediction points on the display for expecting a direction of the gaze based on the first user input. The instructions, when executed by the at least one processor individually or collectively, may cause the wearable device to measure a time interval in which the first user input is received based on identifying at least some of the plurality of prediction points located in one gaze input region among the gaze input regions. The instructions, when executed by the at least one processor individually or collectively, may cause the wearable device to determine calibration of the gaze information related to the gaze based on the time interval exceeding a preset reference time interval.

For example, the electronic device may further comprise at least one sensor. The instructions, when executed by the at least one processor individually or collectively, may cause the wearable device to detect an angle (e.g., the angle a of FIG. 3B) between an axis representing an orientation of the wearable device (e.g., the orientation axis x2 of FIG. 3B) and a reference axis (e.g., the reference axis x1 of FIG. 3B) through the at least one sensor. The instructions, when executed by the at least one processor individually or collectively, may cause the wearable device to determine calibration of the gaze information related to the gaze based on identifying that the angle exceeds a preset reference angle.

For example, the instructions, when executed by the at least one processor individually or collectively, may cause the wearable device to receive a second user input for the visual feedback from the gaze input regions based on determining calibration of the gaze information. The instructions, when executed by the at least one processor individually or collectively, may cause the wearable device to change a location of a plurality of prediction points on the display for expecting a direction of the gaze based on the second user input. The instructions, when executed by the at least one processor individually or collectively, may cause the wearable device to expand the sizes of the gaze input regions by using the calibration information obtained through the location of the plurality of prediction points which is changed. The instructions, when executed by the at least one processor individually or collectively, may cause the wearable device to provide the visual feedback based on identifying at least some of the plurality of prediction points located in one gaze input region among the gaze input regions having the sizes which are expanded.

For example, the instructions, when executed by the at least one processor individually or collectively, may cause the wearable device to display, on the display, one or more guide objects (e.g., the one or more guide objects 910 of FIG. 9B) corresponding to the gaze predicted based on the one or more cameras, based on the sizes of each of the gaze input regions which are reduced.

For example, the instructions, when executed by the at least one processor individually or collectively, may cause the wearable device to determine a location of the one or more guide objects using a location of a plurality of prediction points on the display for expecting a direction of the gaze.

According to an embodiment, a method of a wearable device may comprise displaying a plurality of visual objects on a display of the wearable device. The plurality of visual objects may include gaze input regions respectively formed on the plurality of visual objects for providing visual feedback with respect to a gaze of the user which is facing the plurality of visual objects. The method may comprise, in a state of displaying the plurality of visual objects, identifying whether to calibrate gaze information related to the gaze determined based on one or more cameras of the wearable device configured to track eyes of a user wearing the wearable device. The method may comprise reducing sizes of each of the gaze input regions formed on the visual objects respectively based on determining to calibrate the gaze information. The method may comprise generating calibration information to be used to calibrate the gaze information using the gaze information detected while providing the visual feedback using the sizes which are reduced. The method may comprise expanding the sizes of the gaze input regions by using the calibration information.

For example, the method may further comprise identifying whether an error value corresponding to the calibration information exceeds a specified error value. The method may further comprise executing a function for calibrating the gaze information through a session for storing the gaze information based on identifying the error value exceeding the specified error value. For example, the method may further comprise executing a function for calibrating the gaze information through a session for storing the gaze information based on identifying that an error value less than the specified error value is detected at least a specified number of times and/or for at least a specified period of time.

For example, the method may comprise identifying whether gaze information calibrated through the calibration information is obtained at least a specified number of times, based on the calibration information being detected at least the specified number of times. The method may comprise determining a value corresponding to the calibrated gaze information as a value corresponding to the calibrated gaze information to be provided through a session for storing the gaze information, based on the calibrated gaze information obtained at least the specified number of times. In this case, the wearable device (or a processor of the wearable device) may obtain the value corresponding to the calibrated gaze information to be provided through the session, without using the session.

For example, the method may further comprise setting a plurality of partition regions on the display displaying the plurality of visual objects. The method may further comprise identifying one partition region among the plurality of partition regions in which a plurality of prediction points on the display for expecting a direction of the gaze are located by using the gaze information. The method may further comprise, based on determining calibration of the gaze information, identifying whether calibration of the gaze information has been performed within the one partition region which is identified. The method may further comprise reducing a size of each of one or more gaze input regions respectively formed on one or more visual objects displayed in the one partition region among the plurality of visual objects based on identifying that calibration of the gaze information has not been performed within the one partition region.

For example, the method may further comprise obtaining the calibration information by using the gaze information based on identifying that calibration of the gaze information has been performed within the one partition region. The method may further comprise identifying whether the calibration information converges to an error value to be used to calibrate the gaze information by comparing the calibration information with previously obtained calibration information. The method may further comprise calibrating the gaze information using the error value based on the calibration information converging to the error value.

For example, the method may further comprise changing the size of each of the one or more gaze input regions having a first size by the previously obtained calibration information to a second size different from the first size by using the error value which is converged.

For example, the method may further comprise receiving a first user input for the visual feedback from the gaze input regions. The method may further comprise changing a location of a plurality of prediction points on the display for expecting a direction of a gaze based on the first user input. The method may further comprise measuring a time interval in which the first user input is received based on identifying at least some of the plurality of prediction points located in one gaze input region among the gaze input regions. The method may further comprise determining calibration of the gaze information related to the gaze based on the time interval exceeding a preset reference time interval.

For example, the method may further comprise detecting an angle between an axis representing an orientation of the wearable device and a reference axis through at least one sensor of the wearable device. The method may further comprise determining calibration of the gaze information related to the gaze based on identifying that the angle exceeds a preset reference angle.

For example, the method may further comprise receiving a second user input for the visual feedback from the gaze input regions based on determining calibration of the gaze information. The method may further comprise changing a location of a plurality of prediction points on the display for expecting a direction of a gaze based on the second user input. The method may further comprise expanding the sizes of the gaze input regions by using the calibration information obtained through the location of the plurality of prediction points which is changed. The method may further comprise providing the visual feedback based on identifying at least some of the plurality of prediction points located in one gaze input region among the gaze input regions having the sizes which are expanded.

For example, the method may further comprise displaying, on the display, one or more guide objects corresponding to the gaze predicted based on the one or more cameras, based on the sizes of each of the gaze input regions which are reduced.

According to an embodiment, a non-transitory computer readable storage medium stores one or more programs, wherein the one or more programs may include instructions that, when executed by at least one processor of a wearable device with a display and one or more cameras configured to track eyes of a user wearing the wearable device, cause the at least one processor to display a plurality of visual objects on the display. The plurality of visual objects may include gaze input regions respectively formed on the plurality of visual objects for providing visual feedback with respect to a gaze of the user which is facing the plurality of visual objects. The one or more programs, when executed by the at least one processor, may include instructions that cause the at least one processor to, in a state of displaying the plurality of visual objects, identify whether to calibrate gaze information related to the gaze determined based on the one or more cameras. The one or more programs, when executed by the at least one processor, may include instructions that cause the at least one processor to reduce sizes of each of the gaze input regions formed on the visual objects respectively based on determining to calibrate the gaze information. The one or more programs, when executed by the at least one processor, may include instructions that cause the at least one processor to generate calibration information to be used to calibrate the gaze information using the gaze information detected while providing the visual feedback using the sizes which are reduced. The one or more programs, when executed by the at least one processor, may include instructions that cause the at least one processor to expand the sizes of the gaze input regions by using the calibration information.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable device comprising:
a display system including a first display and a second display;
a camera system including a plurality of cameras, the camera system configured to capture images of eyes of a user while the wearable device is worn on the user;
at least one processor comprising processing circuitry; and
memory, comprising one or more storage mediums, storing instructions that, when executed by the at least one processor individually or collectively, cause the wearable device to:
display, through the display system, a visual object, wherein the visual object is associated with a gaze input region having a first size;
in a case that identified gaze information falls within the gaze input region, provide visual feedback with respect to the visual object;
in a case that calibration related to the gaze information is to be performed in a state of displaying the visual object:
reduce a size of the gaze input region associated with the visual object from the first size to a second size;
generate calibration information based on the gaze information of the user staring at the visual object while the size of the gaze input region is reduced; and
after the calibration information is generated, increase the size of the gaze input region associated with the visual object from the second size.

2. The wearable device of claim 1,
wherein the instructions, when executed by the at least one processor individually or collectively, cause the wearable device to:
identify whether an error value corresponding to the calibration information exceeds a specified error value; and
execute a function for calibrating the gaze information through a session for storing the gaze information, based on identifying the error value exceeding the specified error value.

3. The wearable device of claim 1 or 2,
wherein the instructions, when executed by the at least one processor individually or collectively, cause the wearable device to:
display, through the display system, a plurality of visual object including the visual object on the first display and the second display;
set a plurality of partition regions on the first display and the second display displaying the plurality of visual objects;
identify one partition region among the plurality of partition regions in which a plurality of prediction points on the first display and the second display for expecting a direction of a gaze of the user are located by using the gaze information;
in a case that calibration related to the gaze information is to be performed:
identify whether calibration of the gaze information has been performed within the one partition region which is identified; and
reduce the size of the gaze input region associated with the visual object displayed in the one partition region among the plurality of visual objects from the first size to the second size based on identifying that calibration of the gaze information has not been performed within the one partition region.

4. The wearable device of claim 3,
wherein the instructions, when executed by the at least one processor individually or collectively, cause the wearable device to:
obtain the calibration information by using the gaze information based on identifying that calibration of the gaze information has been performed within the one partition region;
identify whether the calibration information converges to an error value to be used to calibrate the gaze information by comparing the calibration information with previously obtained calibration information; and
calibrate the gaze information using the error value based on the calibration information converging to the error value.

5. The wearable device of claim 4,
wherein the instructions, when executed by the at least one processor individually or collectively, cause the wearable device to increase the size of the gaze input region having the second size by the previously obtained calibration information to a third size by using the error value which is converged through a specified function which is configured to determine the size of the input region according to the error value.

6. The wearable device of any one of claims 1 to 5,
wherein the instructions, when executed by the at least one processor individually or collectively, cause the wearable device to:
receive a first user input for the visual feedback from the gaze input region;
change a location of a plurality of prediction points on the first display and the second display for expecting a direction of a gaze of the user based on the first user input;
measure a time interval in which the first user input is received based on identifying at least some of the plurality of prediction points located in the gaze input region; and
determine calibration of the gaze information related to the gaze based on the time interval exceeding a preset reference time interval.

7. The wearable device of any one of claims 1 to 6 further comprising:
at least one sensor,
wherein the instructions, when executed by the at least one processor individually or collectively, cause the wearable device to:
detect an angle between an axis representing an orientation of the wearable device and a reference axis through the at least one sensor; and
determine calibration of the gaze information related to the gaze based on identifying that the angle exceeds a preset reference angle.

8. The wearable device of any one of claims 1 to 7,
wherein the instructions, when executed by the at least one processor individually or collectively, cause the wearable device to: while performing the calibration related to the gaze information:
receive a second user input for the visual feedback from the gaze input region;
change a location of a plurality of prediction points on the first display and the second display for expecting a direction of a gaze of the user based on the second user input;
increase the size of the gaze input region by using the calibration information obtained through the location of the plurality of prediction points which is changed; and
provide the visual feedback based on identifying at least some of the plurality of prediction points located in the gaze input region having the size which is increased.

9. The wearable device of any one of claims 1 to 8,
wherein the instructions, when executed by the at least one processor individually or collectively, cause the wearable device to display, on the first display and the second display, one or more guide objects corresponding to a gaze of the user predicted based on the plurality of cameras, based on the size of the gaze input region which is reduced from the first size to the second size.

10. The wearable device of claim 9,
wherein the instructions, when executed by the at least one processor individually or collectively, cause the wearable device to determine a location of the one or more guide objects using a location of a plurality of prediction points on the first display and the second display for expecting a direction of a gaze of the user.

11. A method of a wearable device comprising:
displaying a plurality of visual objects on a display of the wearable device, wherein the plurality of visual objects include gaze input regions respectively formed on the plurality of visual objects for providing visual feedback with respect to a gaze of the user which is facing the plurality of visual objects;
determining whether to calibrate gaze information related to the gaze determined based on one or more cameras of the wearable device configured to track eyes of a user wearing the wearable device in a state of displaying the plurality of visual objects;
reducing sizes of each of the gaze input regions respectively formed on the visual objects based on determining to calibrate the gaze information;
generating calibration information to be used to calibrate the gaze information using the gaze information detected while providing the visual feedback using the sizes which are reduced;
obtaining the gaze information which is calibrated by applying the generated calibration information to the gaze information; and
expanding the sizes of the gaze input regions to provide visual feedback with respect to the gaze through the gaze information which is calibrated using the calibration information.

12. The method of claim 11 further comprising:
identifying whether an error value corresponding to the calibration information exceeds a specified error value; and
executing a function for calibrating the gaze information through a session for storing the gaze information based on identifying the error value exceeding the specified error value.

13. The method of claim 11 or 12 further comprising:
setting a plurality of partition regions on the display displaying the plurality of visual objects;
identifying one partition region among the plurality of partition regions in which a plurality of prediction points on the display for expecting a direction of the gaze are located by using the gaze information;
identifying whether calibration of the gaze information has been performed within the one partition region which is identified based on determining calibration of the gaze information; and
reducing a size of each of one or more gaze input regions respectively formed on one or more visual objects displayed in the one partition region among the plurality of visual objects based on identifying that calibration of the gaze information has not been performed within the one partition region.

14. The method of claim 13 further comprising:
obtaining the calibration information by using the gaze information based on identifying that calibration of the gaze information has been performed within the one partition region;
identifying whether the calibration information converges to an error value to be used to calibrate the gaze information by comparing the calibration information with previously obtained calibration information; and
calibrating the gaze information using the error value based on the calibration information converging to the error value.

15. A non-transitory computer readable storage medium storing one or more programs including instructions, wherein the instructions, when executed by at least one processor of a wearable device with a display and one or more cameras configured to track eyes of a user wearing the wearable device, cause the wearable device to:
display a plurality of visual objects on the display, wherein the plurality of visual objects include gaze input regions respectively formed on the plurality of visual objects for providing visual feedback with respect to a gaze of the user which is facing the plurality of visual objects;
identify whether to calibrate gaze information related to the gaze determined based on the one or more cameras in a state of displaying the plurality of visual objects;
reduce sizes of each of the gaze input regions respectively formed on the visual objects based on determining to calibrate the gaze information;
generate calibration information to be used to calibrate the gaze information using the gaze information detected while providing the visual feedback using the sizes which are reduced;
obtain the gaze information which is calibrated by applying the generated calibration information to the gaze information; and
expand the sizes of the gaze input regions to provide visual feedback with respect to the gaze through the gaze information which is calibrated using the calibration information.
